# EUROPEAN PATENT SPECIFICATION

(11) **EP 3 128 769 B1**
(45) Date of publication and mention of the grant of the patent: **01.08.2018**
(21) Application number: 16165239.1
(22) Date of filing: 14.04.2016
(51) Int. Cl.: G06K 9/00, H04W 4/00, H04M 11/04, H04W 24/08, H04W 64/00, H04W 68/04, B60R 25/24, G08G 1/16, H04W 88/02

(54) **VEHICLE WITH CONTROLLING UNIT AND VEHICLE WITH MOBILE TERMINAL**
FAHRZEUG MIT STEUERUNGSGERÄT UND FAHRZEUG MIT MOBILEM ENDGERÄT
VÉHICULE AVEC UNITÉ DE COMMANDE ET VÉHICULE AVEC TERMINAL MOBILE

(30) Priority: 05.08.2015 KR 20150110534
(43) Date of publication of application: 08.02.2017
(73) Proprietor: LG Electronics Inc., Seoul 07336 (KR)
(72) Inventor: CHO, Taehoon, 06772 Seoul (KR); KIM, Kiwan, 06772 Seoul (KR); SEOL, Jie, 06772 Seoul (KR)
(74) Representative: Ter Meer Steinmeister & Partner

(56) References cited:
- WO-A1-2013/133464
- JP-A- 2006 119 920
- JP-A- 2009 205 268
- US-A1- 2006 229 784
- US-A1- 2007 167 147

## Description

### BACKGROUND OF THE INVENTION

### Field of the Invention

The present invention relates to a mobile and a vehicle Although the present invention is suitable for a wide scope of applications, it is particularly suitable for facilitating the use of a terminal in further consideration of user's convenience.

### Discussion of the Related Art

Terminals may be generally classified as mobile/portable terminals or stationary terminals according to their mobility. Mobile terminals may also be classified as handheld terminals or vehicle mounted terminals according to whether or not a user can directly carry the terminal.

Mobile terminals have become increasingly more functional. Examples of such functions include data and voice communications, capturing images and video via a camera, recording audio, playing music files via a speaker system, and displaying images and video on a display. Some mobile terminals include additional functionality which supports game playing, while other terminals are configured as multimedia players. More recently, mobile terminals have been configured to receive broadcast and multicast signals which permit viewing of content such as videos and television programs.

Efforts are ongoing to support and increase the functionality of mobile terminals. Such efforts include software and hardware improvements, as well as changes and improvements in the structural components.

Recently, as such terminals are increasingly popularized, they are used in various daily lives. Particularly, a car mainly employs a mount type terminal stationarily installed in the car in order to control a navigation system, the car and the like. However, functions of terminals installed and used in various ways are used independently only and fail to be used in a manner of being organically connected with one another.

WO 2013/133464 A1 discloses an image display device and a method thereof capable of detecting a distance between an obstacle included in a distorted image captured by a wide angle camera and a vehicle to thus prevent an occurrence of an accident in which the vehicle collides with the obstacle so as to damaged, in advance. The image display device includes: a storage unit configured to store obstacle characteristic images previously captured from multiple viewpoints; an image capture unit configured to capture images of a surrounding area of a vehicle; a controller configured to detect an obstacle from the captured images on the basis of the images captured by the image capture unit and the obstacle characteristic images, and generate warning information when a distance value between the vehicle and the obstacle is equal to or smaller than a first pre-set distance value; and a display unit configured to display the generated warning information.

US 2007/0167147 A1 discloses a method and apparatus for providing emergency notification by a wireless mobile device in response to triggering a sensor. A detection system, which is located within a vehicle, comprises one or more sensors configured to sense an emergency event and transmit a message via a wireless link regarding the emergency event. The wireless mobile device is programmed to call a predetermined emergency number and transmits data including position and other information from the mobile device to the emergency number in response to the received message.

JP 2006-119920 A provides an information terminal device that is easily usable by users of all ages without placing a special burden to users. Therefore, a cellular phone comprises a camera part and an image generation part for acquiring a facial image of a user, an age determination data storage part for determination of age by the facial image, an operation screen data storage part storing operation screens differed from age to age, an age determination part comparing the facial image acquired by the image generation part with the age determination data storage part to determine the age of the user, and a screen selection part selecting an operation screen to be displayed from the operation screen data storage part based on the age determined by the age determination part.

JP 2009-205268 A provides an obstacle display device to reduce the burden on a user by letting the user know about obstacles with high needs of monitoring, if a plurality of obstacles exist around one's own vehicle. The obstacle display device images an obstacle that approaches a vehicle with a rear camera and cameras for rear side monitors, and displays its image on a main monitor, an in-instrument-panel monitor, and an in-room-mirror monitor. The obstacle display device includes outside sensors for detecting obstacles, and an ECU which determines the degree of necessity of monitoring obstacles and which, if there are a plurality of obstacles, displays the obstacles on the main monitor, the in-instrument-panel monitor, and the in-room-mirror monitor in such a way that the obstacles with a relatively higher need of monitoring are highlighted more than the obstacles with a relatively lower need of monitoring.

Thus, when a user of a terminal rides a car, the demand for a control method of enhancing user's safety based on various kinds of sensing signals receivable from the car is increasingly rising.

### SUMMARY OF THE INVENTION

Accordingly, an object of the present invention is to address the above-noted and other problems.

Another object of the present invention is to provide a mobile terminal and a vehicle by which safety of a passenger of a car can be secured on driving or getting off the car.

Technical tasks obtainable from the present invention are non-limited by the above-mentioned technical tasks. And, other unmentioned technical tasks can be clearly understood from the following description by those having ordinary skill in the technical field to which the present invention pertains.

Additional advantages, objects, and features of the invention will be set forth in the disclosure herein as well as the accompanying drawings. Such aspects may also be appreciated by those skilled in the art based on the disclosure herein.

The above identified objects are solved by the features of the independent claims 1 and 9. Advantageous embodiments can be derived from the respective dependent claims.

Further scope of applicability of the present invention will become apparent from the detailed description given hereinafter. However, it should be understood that the detailed description and specific examples, while indicating preferred embodiments of the invention, are given by illustration only, since various changes and modifications within the scope of the invention will become apparent to those skilled in the art from this detailed description.

### BRIEF DESCRIPTION OF THE DRAWINGS

The present invention will become more fully understood from the detailed description given herein below and the accompanying drawings, which are given by illustration only, and thus are not limitative of the present invention, and wherein:
FIG. 1A is a block diagram of a mobile terminal in accordance with the present disclosure;
FIGS. 1B and 1C are conceptual views of one example of the mobile terminal, viewed from different directions;
FIG. 1D is a block diagram to describe a car related to the present invention;
FIG. 2 is a diagram for one example of a mobile terminal mounted in a car according to one embodiment of the present invention;
FIG. 3A is a flowchart for a method of controlling a mobile terminal 100 for safety of a passenger according to one embodiment of the present invention;
FIG. 3B is a flowchart for a method of controlling a car 200 for safety of a passenger according to one embodiment of the present invention;
FIG. 4 is a diagram for a control method of determining whether a passenger is a child according to one embodiment of the present invention;
FIG. 5 is a diagram for a control method of outputting a children's content, when a child is on board, according to one embodiment of the present invention;
FIG. 6 is a diagram for a control method of easily watching a rear seat shot image from a driver seat, when a child is on board, according to one embodiment of the present invention;
FIG. 7 is a diagram for a control method of automatically controlling doors of a car according to one embodiment of the present invention;
FIG. 8 is a diagram for a control method of detecting a release of a safety belt and then outputting a danger warning based on the detected release according to one embodiment of the present invention;
FIG. 9 is a diagram for a control method of detecting a movement of another car around a user-occupant car and giving a warning by outputting the detected movement to a dashboard according to one embodiment of the present invention;
FIG. 10 is a diagram of installation locations and facing directions of sensors and/or cameras possibly provided to a car according to one embodiment of the present invention;
FIG. 11 is a diagram for a control method of outputting a warning based on a car detected through a camera and a movement of the detected car according to one embodiment of the present invention;
FIG. 12 is a diagram for one example of a notification of an alighting danger through a mobile terminal carried by a passenger according to one embodiment of the present invention;
FIG. 13 is a diagram for a control method of if detecting that a child attempts to get off, playing a children's content according to one embodiment of the present invention;
FIG. 14 is a diagram for a method of detecting that a child is getting off a car according to one embodiment of the present invention;
FIG. 15 and FIG. 16 are diagrams for one example of a warning notification outputtable to a child or passenger attempting to get off a car according to one embodiment of the present invention;
FIG. 17 is a diagram for a method of giving a warning to a different vehicle, which currently approaches in a rear or side direction, according to one embodiment of the present invention;
FIG. 18 is a diagram for a control method in case of detecting that a child 501 is getting off a car in the course of outputting a children's content through a rear seat terminal 100-2 according to one embodiment of the present invention;
FIG. 19 is a diagram for a control method in case of detecting that a door of a car is being opened in the course of outputting a rear side image 1302 according to one embodiment of the present invention;
FIG. 20 is a diagram for a method of controlling a car window by distinguishing the car window depending on a passenger's weight according to one embodiment of the present invention; and
FIG. 21 is a diagram to describe one example of a method of adjusting a fastened level of a safety belt worn by a child in accordance with a driving information of a car according to one embodiment of the present invention.

### DETAILED DESCRIPTION OF THE INVENTION

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be connected with the other element or intervening elements may also be present. In contrast, when an element is referred to as being "directly connected with" another element, there are no intervening elements present.

A singular representation may include a plural representation unless it represents a definitely different meaning from the context. Terms such as "include" or "has" are used herein and should be understood that they are intended to indicate an existence of several components, functions or steps, disclosed in the specification, and it is also understood that greater or fewer components, functions, or steps may likewise be utilized.

Mobile terminals presented herein may be implemented using a variety of different types of terminals. Examples of such terminals include cellular phones, smart phones, user equipment, laptop computers, digital broadcast terminals, personal digital assistants (PDAs), portable multimedia players (PMPs), navigators, portable computers (PCs), slate PCs, tablet PCs, ultra books, wearable devices (for example, smart watches, smart glasses, head mounted displays (HMDs)), and the like.

By way of non-limiting example only, further description will be made with reference to particular types of mobile terminals. However, such teachings apply equally to other types of terminals, such as those types noted above. In addition, these teachings may also be applied to stationary terminals such as digital TV, desktop computers, and the like.

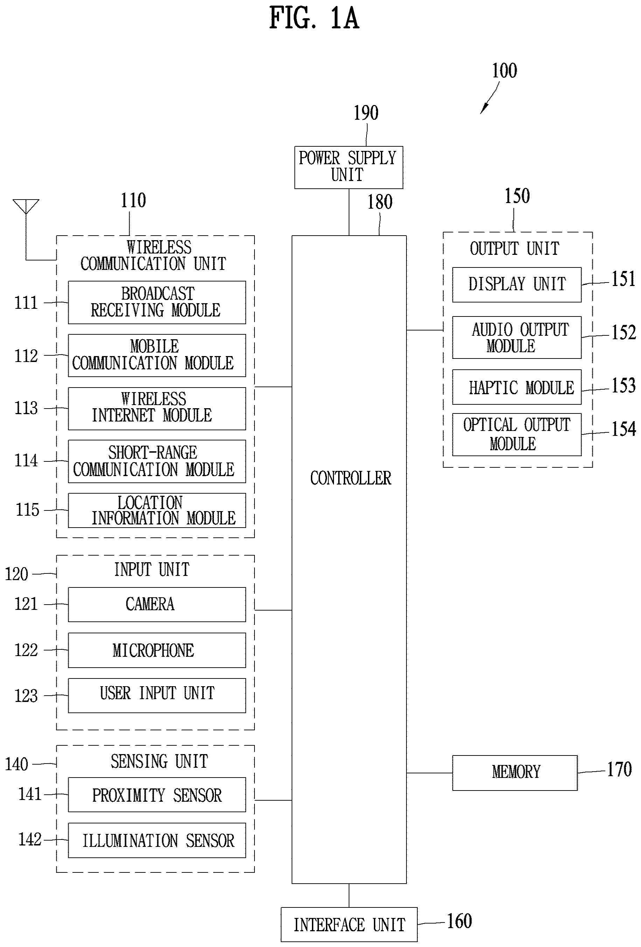

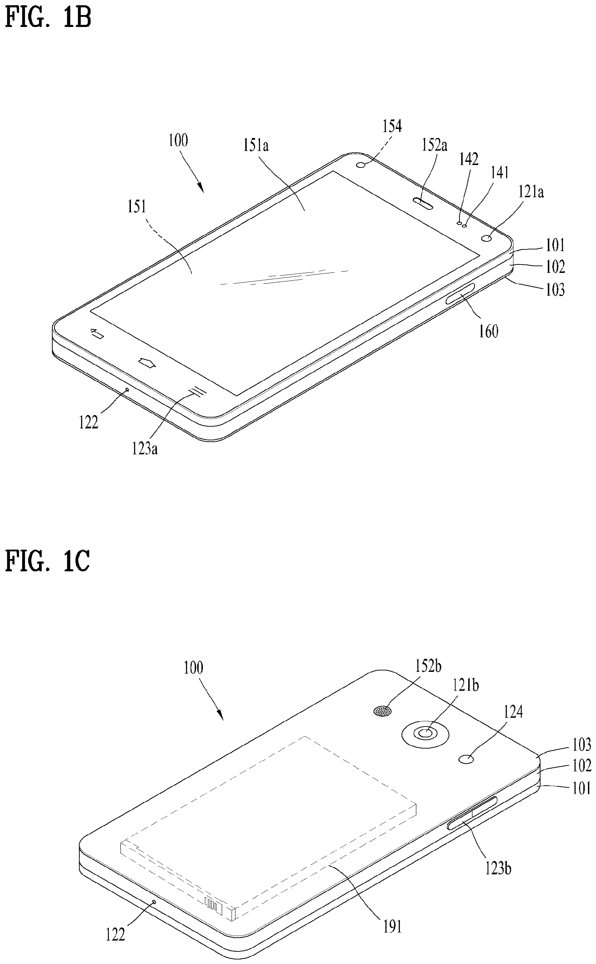

Reference is now made to FIGS. 1A-1C, where FIG. 1A is a block diagram of a mobile terminal in accordance with the present disclosure, and FIGS. 1B and 1C are conceptual views of one example of the mobile terminal, viewed from different directions.

The mobile terminal 100 is shown having components such as a wireless communication unit 110, an input unit 120, a sensing unit 140, an output unit 150, an interface unit 160, a memory 170, a controller 180, and a power supply unit 190. It is understood that implementing all of the illustrated components is not a requirement, and that greater or fewer components may alternatively be implemented.

Referring now to FIG. 1A, the mobile terminal 100 is shown having wireless communication unit 110 configured with several commonly implemented components. For instance, the wireless communication unit 110 typically includes one or more components which permit wireless communication between the mobile terminal 100 and a wireless communication system or network within which the mobile terminal is located.

The wireless communication unit 110 typically includes one or more modules which permit communications such as wireless communications between the mobile terminal 100 and a wireless communication system, communications between the mobile terminal 100 and another mobile terminal, communications between the mobile terminal 100 and an external server. Further, the wireless communication unit 110 typically includes one or more modules which connect the mobile terminal 100 to one or more networks. To facilitate such communications, the wireless communication unit 110 includes one or more of a broadcast receiving module 111, a mobile communication module 112, a wireless Internet module 113, a short-range communication module 114, and a location information module 115.

The input unit 120 includes a camera 121 for obtaining images or video, a microphone 122, which is one type of audio input device for inputting an audio signal, and a user input unit 123 (for example, a touch key, a push key, a mechanical key, a soft key, and the like) for allowing a user to input information. Data (for example, audio, video, image, and the like) is obtained by the input unit 120 and may be analyzed and processed by controller 180 according to device parameters, user commands, and combinations thereof.

The sensing unit 140 is typically implemented using one or more sensors configured to sense internal information of the mobile terminal, the surrounding environment of the mobile terminal, user information, and the like. For example, in FIG. 1A, the sensing unit 140 is shown having a proximity sensor 141 and an illumination sensor 142.

If desired, the sensing unit 140 may alternatively or additionally include other types of sensors or devices, such as a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, camera 121), a microphone 122, a battery gauge, an environment sensor (for example, a barometer, a hygrometer, a thermometer, a radiation detection sensor, a thermal sensor, and a gas sensor, among others), and a chemical sensor (for example, an electronic nose, a health care sensor, a biometric sensor, and the like), to name a few. The mobile terminal 100 may be configured to utilize information obtained from sensing unit 140, and in particular, information obtained from one or more sensors of the sensing unit 140, and combinations thereof.

The output unit 150 is typically configured to output various types of information, such as audio, video, tactile output, and the like. The output unit 150 is shown having a display unit 151, an audio output module 152, a haptic module 153, and an optical output module 154.

The display unit 151 may have an inter-layered structure or an integrated structure with a touch sensor in order to facilitate a touch screen. The touch screen may provide an output interface between the mobile terminal 100 and a user, as well as function as the user input unit 123 which provides an input interface between the mobile terminal 100 and the user.

The interface unit 160 serves as an interface with various types of external devices that can be coupled to the mobile terminal 100. The interface unit 160, for example, may include any of wired or wireless ports, external power supply ports, wired or wireless data ports, memory card ports, ports for connecting a device having an identification module, audio input/output (I/O) ports, video I/O ports, earphone ports, and the like. In some cases, the mobile terminal 100 may perform assorted control functions associated with a connected external device, in response to the external device being connected to the interface unit 160.

The memory 170 is typically implemented to store data to support various functions or features of the mobile terminal 100. For instance, the memory 170 may be configured to store application programs executed in the mobile terminal 100, data or instructions for operations of the mobile terminal 100, and the like. Some of these application programs may be downloaded from an external server via wireless communication. Other application programs may be installed within the mobile terminal 100 at time of manufacturing or shipping, which is typically the case for basic functions of the mobile terminal 100 (for example, receiving a call, placing a call, receiving a message, sending a message, and the like). It is common for application programs to be stored in the memory 170, installed in the mobile terminal 100, and executed by the controller 180 to perform an operation (or function) for the mobile terminal 100.

The controller 180 typically functions to control overall operation of the mobile terminal 100, in addition to the operations associated with the application programs. The controller 180 may provide or process information or functions appropriate for a user by processing signals, data, information and the like, which are input or output by the various components depicted in Fig. 1A, or activating application programs stored in the memory 170. As one example, the controller 180 controls some or all of the components illustrated in FIGS. 1A-1C according to the execution of an application program that have been stored in the memory 170.

The power supply unit 190 can be configured to receive external power or provide internal power in order to supply appropriate power required for operating elements and components included in the mobile terminal 100. The power supply unit 190 may include a battery, and the battery may be configured to be embedded in the terminal body, or configured to be detachable from the terminal body.

Referring still to FIG. 1A, various components depicted in this figure will now be described in more detail. Regarding the wireless communication unit 110, the broadcast receiving module 111 is typically configured to receive a broadcast signal and/or broadcast associated information from an external broadcast managing entity via a broadcast channel. The broadcast channel may include a satellite channel, a terrestrial channel, or both. In some embodiments, two or more broadcast receiving modules 111 may be utilized to facilitate simultaneously receiving of two or more broadcast channels, or to support switching among broadcast channels.

system which generates and transmits a broadcast signal and/or broadcast associated information, or a server which receives a pre-generated broadcast signal and/or broadcast associated information, and sends such items to the mobile terminal. The broadcast signal may be implemented using any of a TV broadcast signal, a radio broadcast signal, a data broadcast signal, and combinations thereof, among others. The broadcast signal in some cases may further include a data broadcast signal combined with a TV or radio broadcast signal.

The broadcast signal may be encoded according to any of a variety of technical standards or broadcasting methods (for example, International Organization for Standardization (ISO), International Electrotechnical Commission (IEC), Digital Video Broadcast (DVB), Advanced Television Systems Committee (ATSC), and the like) for transmission and reception of digital broadcast signals. The broadcast receiving module 111 can receive the digital broadcast signals using a method appropriate for the transmission method utilized.

Examples of broadcast associated information may include information associated with a broadcast channel, a broadcast program, a broadcast event, a broadcast service provider, or the like. The broadcast associated information may also be provided via a mobile communication network, and in this case, received by the mobile communication module 112.

The broadcast associated information may be implemented in various formats. For instance, broadcast associated information may include an Electronic Program Guide (EPG) of Digital Multimedia Broadcasting (DMB), an Electronic Service Guide (ESG) of Digital Video Broadcast-Handheld (DVB-H), and the like. Broadcast signals and/or broadcast associated information received via the broadcast receiving module 111 may be stored in a suitable device, such as a memory 170.

The mobile communication module 112 can transmit and/or receive wireless signals to and from one or more network entities. Typical examples of a network entity include a base station, an external mobile terminal, a server, and the like. Such network entities form part of a mobile communication network, which is constructed according to technical standards or communication methods for mobile communications (for example, Global System for Mobile Communication (GSM), Code Division Multi Access (CDMA), CDMA2000(Code Division Multi Access 2000), EV-DO(Enhanced Voice-Data Optimized or Enhanced Voice-Data Only), Wideband CDMA (WCDMA), High Speed Downlink Packet access (HSDPA), HSUPA(High Speed Uplink Packet Access), Long Term Evolution (LTE), LTE-A(Long Term Evolution-Advanced), and the like). Examples of wireless signals transmitted and/or received via the mobile communication module 112 include audio call signals, video (telephony) call signals, or various formats of data to support communication of text and multimedia messages.

The wireless Internet module 113 is configured to facilitate wireless Internet access. This module may be internally or externally coupled to the mobile terminal 100. The wireless Internet module 113 may transmit and/or receive wireless signals via communication networks according to wireless Internet technologies.

Examples of such wireless Internet access include Wireless LAN (WLAN), Wireless Fidelity (Wi-Fi), Wi-Fi Direct, Digital Living Network Alliance (DLNA), Wireless Broadband (WiBro), Worldwide Interoperability for Microwave Access (WiMAX), High Speed Downlink Packet Access (HSDPA), HSUPA(High Speed Uplink Packet Access), Long Term Evolution (LTE), LTE-A(Long Term Evolution-Advanced), and the like. The wireless Internet module 113 may transmit/receive data according to one or more of such wireless Internet technologies, and other Internet technologies as well.

In some embodiments, when the wireless Internet access is implemented according to, for example, WiBro, HSDPA,HSUPA, GSM, CDMA, WCDMA, LTE, LTE-A and the like, as part of a mobile communication network, the wireless Internet module 113 performs such wireless Internet access. As such, the Internet module 113 may cooperate with, or function as, the mobile communication module 112.

The short-range communication module 114 is configured to facilitate short-range communications. Suitable technologies for implementing such short-range communications include BLUETOOTHTM, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless USB(Wireless Universal Serial Bus), and the like. The short-range communication module 114 in general supports wireless communications between the mobile terminal 100 and a wireless communication system, communications between the mobile terminal 100 and another mobile terminal 100, or communications between the mobile terminal and a network where another mobile terminal 100 (or an external server) is located, via wireless area networks. One example of the wireless area networks is a wireless personal area networks.

In some embodiments, another mobile terminal (which may be configured similarly to mobile terminal 100) may be a wearable device, for example, a smart watch, a smart glass or a head mounted display (HMD), which is able to exchange data with the mobile terminal 100 (or otherwise cooperate with the mobile terminal 100). The short-range communication module 114 may sense or recognize the wearable device, and permit communication between the wearable device and the mobile terminal 100. In addition, when the sensed wearable device is a device which is authenticated to communicate with the mobile terminal 100, the controller 180, for example, may cause transmission of data processed in the mobile terminal 100 to the wearable device via the short-range communication module 114. Hence, a user of the wearable device may use the data processed in the mobile terminal 100 on the wearable device. For example, when a call is received in the mobile terminal 100, the user may answer the call using the wearable device. Also, when a message is received in the mobile terminal 100, the user can check the received message using the wearable device.

The location information module 115 is generally configured to detect, calculate, derive or otherwise identify a position of the mobile terminal. As an example, the location information module 115 includes a Global Position System (GPS) module, a Wi-Fi module, or both. If desired, the location information module 115 may alternatively or additionally function with any of the other modules of the wireless communication unit 110 to obtain data related to the position of the mobile terminal.

As one example, when the mobile terminal uses a GPS module, a position of the mobile terminal may be acquired using a signal sent from a GPS satellite. As another example, when the mobile terminal uses the Wi-Fi module, a position of the mobile terminal can be acquired based on information related to a wireless access point (AP) which transmits or receives a wireless signal to or from the Wi-Fi module.

The input unit 120 may be configured to permit various types of input to the mobile terminal 120. Examples of such input include audio, image, video, data, and user input. Image and video input is often obtained using one or more cameras 121. Such cameras 121 may process image frames of still pictures or video obtained by image sensors in a video or image capture mode. The processed image frames can be displayed on the display unit 151 or stored in memory 170. In some cases, the cameras 121 may be arranged in a matrix configuration to permit a plurality of images having various angles or focal points to be input to the mobile terminal 100. As another example, the cameras 121 may be located in a stereoscopic arrangement to acquire left and right images for implementing a stereoscopic image.

The microphone 122 is generally implemented to permit audio input to the mobile terminal 100. The audio input can be processed in various manners according to a function being executed in the mobile terminal 100. If desired, the microphone 122 may include assorted noise removing algorithms to remove unwanted noise generated in the course of receiving the external audio.

The user input unit 123 is a component that permits input by a user. Such user input may enable the controller 180 to control operation of the mobile terminal 100. The user input unit 123 may include one or more of a mechanical input element (for example, a key, a button located on a front and/or rear surface or a side surface of the mobile terminal 100, a dome switch, a jog wheel, a jog switch, and the like), or a touch-sensitive input, among others. As one example, the touch-sensitive input may be a virtual key or a soft key, which is displayed on a touch screen through software processing, or a touch key which is located on the mobile terminal at a location that is other than the touch screen. On the other hand, the virtual key or the visual key may be displayed on the touch screen in various shapes, for example, graphic, text, icon, video, or a combination thereof.

The sensing unit 140 is generally configured to sense one or more of internal information of the mobile terminal, surrounding environment information of the mobile terminal, user information, or the like. The controller 180 generally cooperates with the sending unit 140 to control operation of the mobile terminal 100 or execute data processing, a function or an operation associated with an application program installed in the mobile terminal based on the sensing provided by the sensing unit 140. The sensing unit 140 may be implemented using any of a variety of sensors, some of which will now be described in more detail.

The proximity sensor 141 may include a sensor to sense presence or absence of an object approaching a surface, or an object located near a surface, by using an electromagnetic field, infrared rays, or the like without a mechanical contact. The proximity sensor 141 may be arranged at an inner region of the mobile terminal covered by the touch screen, or near the touch screen.

The proximity sensor 141, for example, may include any of a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and the like. When the touch screen is implemented as a capacitance type, the proximity sensor 141 can sense proximity of a pointer relative to the touch screen by changes of an electromagnetic field, which is responsive to an approach of an object with conductivity. In this case, the touch screen (touch sensor) may also be categorized as a proximity sensor.

The term "proximity touch" will often be referred to herein to denote the scenario in which a pointer is positioned to be proximate to the touch screen without contacting the touch screen. The term "contact touch" will often be referred to herein to denote the scenario in which a pointer makes physical contact with the touch screen. For the position corresponding to the proximity touch of the pointer relative to the touch screen, such position will correspond to a position where the pointer is perpendicular to the touch screen. The proximity sensor 141 may sense proximity touch, and proximity touch patterns (for example, distance, direction, speed, time, position, moving status, and the like).

In general, controller 180 processes data corresponding to proximity touches and proximity touch patterns sensed by the proximity sensor 141, and cause output of visual information on the touch screen. In addition, the controller 180 can control the mobile terminal 100 to execute different operations or process different data according to whether a touch with respect to a point on the touch screen is either a proximity touch or a contact touch.

A touch sensor can sense a touch applied to the touch screen, such as display unit 151, using any of a variety of touch methods. Examples of such touch methods include a resistive type, a capacitive type, an infrared type, and a magnetic field type, among others.

As one example, the touch sensor may be configured to convert changes of pressure applied to a specific part of the display unit 151, or convert capacitance occurring at a specific part of the display unit 151, into electric input signals. The touch sensor may also be configured to sense not only a touched position and a touched area, but also touch pressure and/or touch capacitance. A touch object is generally used to apply a touch input to the touch sensor. Examples of typical touch objects include a finger, a touch pen, a stylus pen, a pointer, or the like.

When a touch input is sensed by a touch sensor, corresponding signals may be transmitted to a touch controller. The touch controller may process the received signals, and then transmit corresponding data to the controller 180. Accordingly, the controller 180 may sense which region of the display unit 151 has been touched. Here, the touch controller may be a component separate from the controller 180, the controller 180, and combinations thereof.

In some embodiments, the controller 180 may execute the same or different controls according to a type of touch object that touches the touch screen or a touch key provided in addition to the touch screen. Whether to execute the same or different control according to the object which provides a touch input may be decided based on a current operating state of the mobile terminal 100 or a currently executed application program, for example.

The touch sensor and the proximity sensor may be implemented individually, or in combination, to sense various types of touches. Such touches includes a short (or tap) touch, a long touch, a multi-touch, a drag touch, a flick touch, a pinch-in touch, a pinch-out touch, a swipe touch, a hovering touch, and the like.

If desired, an ultrasonic sensor may be implemented to recognize position information relating to a touch object using ultrasonic waves. The controller 180, for example, may calculate a position of a wave generation source based on information sensed by an illumination sensor and a plurality of ultrasonic sensors. Since light is much faster than ultrasonic waves, the time for which the light reaches the optical sensor is much shorter than the time for which the ultrasonic wave reaches the ultrasonic sensor. The position of the wave generation source may be calculated using this fact. For instance, the position of the wave generation source may be calculated using the time difference from the time that the ultrasonic wave reaches the sensor based on the light as a reference signal.

The camera 121 typically includes at least one a camera sensor (CCD, CMOS etc.), a photo sensor (or image sensors), and a laser sensor.

Implementing the camera 121 with a laser sensor may allow detection of a touch of a physical object with respect to a 3D stereoscopic image. The photo sensor may be laminated on, or overlapped with, the display device. The photo sensor may be configured to scan movement of the physical object in proximity to the touch screen. In more detail, the photo sensor may include photo diodes and transistors at rows and columns to scan content received at the photo sensor using an electrical signal which changes according to the quantity of applied light. Namely, the photo sensor may calculate the coordinates of the physical object according to variation of light to thus obtain position information of the physical object.

The display unit 151 is generally configured to output information processed in the mobile terminal 100. For example, the display unit 151 may display execution screen information of an application program executing at the mobile terminal 100 or user interface (UI) and graphic user interface (GUI) information in response to the execution screen information.

In some embodiments, the display unit 151 may be implemented as a stereoscopic display unit for displaying stereoscopic images. A typical stereoscopic display unit may employ a stereoscopic display scheme such as a stereoscopic scheme (a glass scheme), an auto-stereoscopic scheme (glassless scheme), a projection scheme (holographic scheme), or the like.

In general, a 3D stereoscopic image may include a left image (e.g., a left eye image) and a right image (e.g., a right eye image). According to how left and right images are combined into a 3D stereoscopic image, a 3D stereoscopic imaging method can be divided into a top-down method in which left and right images are located up and down in a frame, an L-to-R (left-to-right or side by side) method in which left and right images are located left and right in a frame, a checker board method in which fragments of left and right images are located in a tile form, an interlaced method in which left and right images are alternately located by columns or rows, and a time sequential (or frame by frame) method in which left and right images are alternately displayed on a time basis.

Also, as for a 3D thumbnail image, a left image thumbnail and a right image thumbnail can be generated from a left image and a right image of an original image frame, respectively, and then combined to generate a single 3D thumbnail image. In general, the term "thumbnail" may be used to refer to a reduced image or a reduced still image. A generated left image thumbnail and right image thumbnail may be displayed with a horizontal distance difference there between by a depth corresponding to the disparity between the left image and the right image on the screen, thereby providing a stereoscopic space sense.

A left image and a right image required for implementing a 3D stereoscopic image may be displayed on the stereoscopic display unit using a stereoscopic processing unit. The stereoscopic processing unit can receive the 3D image and extract the left image and the right image, or can receive the 2D image and change it into a left image and a right image.

The audio output module 152 is generally configured to output audio data. Such audio data may be obtained from any of a number of different sources, such that the audio data may be received from the wireless communication unit 110 or may have been stored in the memory 170. The audio data may be output during modes such as a signal reception mode, a call mode, a record mode, a voice recognition mode, a broadcast reception mode, and the like. The audio output module 152 can provide audible output related to a particular function (e.g., a call signal reception sound, a message reception sound, etc.) performed by the mobile terminal 100. The audio output module 152 may also be implemented as a receiver, a speaker, a buzzer, or the like.

A haptic module 153 can be configured to generate various tactile effects that a user feels, perceive, or otherwise experience. A typical example of a tactile effect generated by the haptic module 153 is vibration. The strength, pattern and the like of the vibration generated by the haptic module 153 can be controlled by user selection or setting by the controller. For example, the haptic module 153 may output different vibrations in a combining manner or a sequential manner.

Besides vibration, the haptic module 153 can generate various other tactile effects, including an effect by stimulation such as a pin arrangement vertically moving to contact skin, a spray force or suction force of air through a jet orifice or a suction opening, a touch to the skin, a contact of an electrode, electrostatic force, an effect by reproducing the sense of cold and warmth using an element that can absorb or generate heat, and the like.

The haptic module 153 can also be implemented to allow the user to feel a tactile effect through a muscle sensation such as the user's fingers or arm, as well as transferring the tactile effect through direct contact. Two or more haptic modules 153 may be provided according to the particular configuration of the mobile terminal 100.

An optical output module 154 can output a signal for indicating an event generation using light of a light source. Examples of events generated in the mobile terminal 100 may include message reception, call signal reception, a missed call, an alarm, a schedule notice, an email reception, information reception through an application, and the like.

A signal output by the optical output module 154 may be implemented in such a manner that the mobile terminal emits monochromatic light or light with a plurality of colors. The signal output may be terminated as the mobile terminal senses that a user has checked the generated event, for example.

The interface unit 160 serves as an interface for external devices to be connected with the mobile terminal 100. For example, the interface unit 160 can receive data transmitted from an external device, receive power to transfer to elements and components within the mobile terminal 100, or transmit internal data of the mobile terminal 100 to such external device. The interface unit 160 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating authority of using the mobile terminal 100 and may include a user identity module (UIM), a subscriber identity module (SIM), a universal subscriber identity module (USIM), and the like. In addition, the device having the identification module (also referred to herein as an "identifying device") may take the form of a smart card. Accordingly, the identifying device can be connected with the terminal 100 via the interface unit 160.

When the mobile terminal 100 is connected with an external cradle, the interface unit 160 can serve as a passage to allow power from the cradle to be supplied to the mobile terminal 100 or may serve as a passage to allow various command signals input by the user from the cradle to be transferred to the mobile terminal there through. Various command signals or power input from the cradle may operate as signals for recognizing that the mobile terminal is properly mounted on the cradle.

The memory 170 can store programs to support operations of the controller 180 and store input/output data (for example, phonebook, messages, still images, videos, etc.). The memory 170 may store data related to various patterns of vibrations and audio which are output in response to touch inputs on the touch screen.

The memory 170 may include one or more types of storage mediums including a Flash memory, a hard disk, a solid state disk, a silicon disk, a multimedia card micro type, a card-type memory (e.g., SD or DX memory, etc), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, an optical disk, and the like. The mobile terminal 100 may also be operated in relation to a network storage device that performs the storage function of the memory 170 over a network, such as the Internet.

The controller 180 may typically control the general operations of the mobile terminal 100. For example, the controller 180 may set or release a lock state for restricting a user from inputting a control command with respect to applications when a status of the mobile terminal meets a preset condition.

The controller 180 can also perform the controlling and processing associated with voice calls, data communications, video calls, and the like, or perform pattern recognition processing to recognize a handwriting input or a picture drawing input performed on the touch screen as characters or images, respectively. In addition, the controller 180 can control one or a combination of those components in order to implement various exemplary embodiments disclosed herein.

The power supply unit 190 receives external power or provide internal power and supply the appropriate power required for operating respective elements and components included in the mobile terminal 100. The power supply unit 190 may include a battery, which is typically rechargeable or be detachably coupled to the terminal body for charging.

The power supply unit 190 may include a connection port. The connection port may be configured as one example of the interface unit 160 to which an external charger for supplying power to recharge the battery is electrically connected.

As another example, the power supply unit 190 may be configured to recharge the battery in a wireless manner without use of the connection port. In this example, the power supply unit 190 can receive power, transferred from an external wireless power transmitter, using at least one of an inductive coupling method which is based on magnetic induction or a magnetic resonance coupling method which is based on electromagnetic resonance.

Various embodiments described herein may be implemented in a computer-readable medium, a machine-readable medium, or similar medium using, for example, software, hardware, or any combination thereof.

Referring now to FIGS. 1B and 1C, the mobile terminal 100 is described with reference to a bar-type terminal body. However, the mobile terminal 100 may alternatively be implemented in any of a variety of different configurations. Examples of such configurations include watch-type, clip-type, glasses-type, or as a folder-type, flip-type, slide-type, swing-type, and swivel-type in which two and more bodies are combined with each other in a relatively movable manner, and combinations thereof. Discussion herein will often relate to a particular type of mobile terminal (for example, bar-type, watch-type, glasses-type, and the like). However, such teachings with regard to a particular type of mobile terminal will generally apply to other types of mobile terminals as well.

The mobile terminal 100 will generally include a case (for example, frame, housing, cover, and the like) forming the appearance of the terminal. In this embodiment, the case is formed using a front case 101 and a rear case 102. Various electronic components are incorporated into a space formed between the front case 101 and the rear case 102. At least one middle case may be additionally positioned between the front case 101 and the rear case 102.

The display unit 151 is shown located on the front side of the terminal body to output information. As illustrated, a window 151a of the display unit 151 may be mounted to the front case 101 to form the front surface of the terminal body together with the front case 101.

In some embodiments, electronic components may also be mounted to the rear case 102. Examples of such electronic components include a detachable battery 191, an identification module, a memory card, and the like. Rear cover 103 is shown covering the electronic components, and this cover may be detachably coupled to the rear case 102. Therefore, when the rear cover 103 is detached from the rear case 102, the electronic components mounted to the rear case 102 are externally exposed.

As illustrated, when the rear cover 103 is coupled to the rear case 102, a side surface of the rear case 102 is partially exposed. In some cases, upon the coupling, the rear case 102 may also be completely shielded by the rear cover 103. In some embodiments, the rear cover 103 may include an opening for externally exposing a camera 121b or an audio output module 152b.

The cases 101, 102, 103 may be formed by injection-molding synthetic resin or may be formed of a metal, for example, stainless steel (STS), aluminum (Al), titanium (Ti), or the like.

As an alternative to the example in which the plurality of cases form an inner space for accommodating components, the mobile terminal 100 may be configured such that one case forms the inner space. In this example, a mobile terminal 100 having a uni-body is formed in such a manner that synthetic resin or metal extends from a side surface to a rear surface.

If desired, the mobile terminal 100 may include a waterproofing unit (not shown) for preventing introduction of water into the terminal body. For example, the waterproofing unit may include a waterproofing member which is located between the window 151a and the front case 101, between the front case 101 and the rear case 102, or between the rear case 102 and the rear cover 103, to hermetically seal an inner space when those cases are coupled.

FIGS. 1B and 1C depict certain components as arranged on the mobile terminal. However, it is to be understood that alternative arrangements are possible and within the teachings of the instant disclosure. Some components may be omitted or rearranged. For example, the first manipulation unit 123a may be located on another surface of the terminal body, and the second audio output module 152b may be located on the side surface of the terminal body.

The display unit 151 outputs information processed in the mobile terminal 100. The display unit 151 may be implemented using one or more suitable display devices. Examples of such suitable display devices include a liquid crystal display (LCD), a thin film transistor-liquid crystal display (TFT-LCD), an organic light emitting diode (OLED), a flexible display, a 3-dimensional (3D) display, an e-ink display, and combinations thereof.

The display unit 151 may be implemented using two display devices, which can implement the same or different display technology. For instance, a plurality of the display units 151 may be arranged on one side, either spaced apart from each other, or these devices may be integrated, or these devices may be arranged on different surfaces.

The display unit 151 may also include a touch sensor which senses a touch input received at the display unit. When a touch is input to the display unit 151, the touch sensor may be configured to sense this touch and the controller 180, for example, may generate a control command or other signal corresponding to the touch. The content which is input in the touching manner may be a text or numerical value, or a menu item which can be indicated or designated in various modes.

The touch sensor may be configured in a form of a film having a touch pattern, disposed between the window 151a and a display on a rear surface of the window 151a, or a metal wire which is patterned directly on the rear surface of the window 151a. Alternatively, the touch sensor may be integrally formed with the display. For example, the touch sensor may be disposed on a substrate of the display or within the display.

The display unit 151 may also form a touch screen together with the touch sensor. Here, the touch screen may serve as the user input unit 123 (see FIG. 1A). Therefore, the touch screen may replace at least some of the functions of the first manipulation unit 123a.

The first audio output module 152a may be implemented in the form of a speaker to output voice audio, alarm sounds, multimedia audio reproduction, and the like.

The window 151a of the display unit 151 will typically include an aperture to permit audio generated by the first audio output module 152a to pass. One alternative is to allow audio to be released along an assembly gap between the structural bodies (for example, a gap between the window 151a and the front case 101). In this case, a hole independently formed to output audio sounds may not be seen or is otherwise hidden in terms of appearance, thereby further simplifying the appearance and manufacturing of the mobile terminal 100.

The optical output module 154 can be configured to output light for indicating an event generation. Examples of such events include a message reception, a call signal reception, a missed call, an alarm, a schedule notice, an email reception, information reception through an application, and the like. When a user has checked a generated event, the controller can control the optical output unit 154 to stop the light output.

The first camera 121a can process image frames such as still or moving images obtained by the image sensor in a capture mode or a video call mode. The processed image frames can then be displayed on the display unit 151 or stored in the memory 170.

The first and second manipulation units 123a and 123b are examples of the user input unit 123, which may be manipulated by a user to provide input to the mobile terminal 100. The first and second manipulation units 123a and 123b may also be commonly referred to as a manipulating portion, and may employ any tactile method that allows the user to perform manipulation such as touch, push, scroll, or the like. The first and second manipulation units 123a and 123b may also employ any non-tactile method that allows the user to perform manipulation such as proximity touch, hovering, or the like.

FIG. 1B illustrates the first manipulation unit 123a as a touch key, but possible alternatives include a mechanical key, a push key, a touch key, and combinations thereof.

Input received at the first and second manipulation units 123a and 123b may be used in various ways. For example, the first manipulation unit 123a may be used by the user to provide an input to a menu, home key, cancel, search, or the like, and the second manipulation unit 123b may be used by the user to provide an input to control a volume level being output from the first or second audio output modules 152a or 152b, to switch to a touch recognition mode of the display unit 151, or the like.

As another example of the user input unit 123, a rear input unit (not shown) may be located on the rear surface of the terminal body. The rear input unit can be manipulated by a user to provide input to the mobile terminal 100. The input may be used in a variety of different ways. For example, the rear input unit may be used by the user to provide an input for power on/off, start, end, scroll, control volume level being output from the first or second audio output modules 152a or 152b, switch to a touch recognition mode of the display unit 151, and the like. The rear input unit may be configured to permit touch input, a push input, or combinations thereof.

The rear input unit may be located to overlap the display unit 151 of the front side in a thickness direction of the terminal body. As one example, the rear input unit may be located on an upper end portion of the rear side of the terminal body such that a user can easily manipulate it using a forefinger when the user grabs the terminal body with one hand. Alternatively, the rear input unit can be positioned at most any location of the rear side of the terminal body.

Embodiments that include the rear input unit may implement some or all of the functionality of the first manipulation unit 123a in the rear input unit. As such, in situations where the first manipulation unit 123a is omitted from the front side, the display unit 151 can have a larger screen.

As a further alternative, the mobile terminal 100 may include a finger scan sensor which scans a user's fingerprint. The controller 180 can then use fingerprint information sensed by the finger scan sensor as part of an authentication procedure. The finger scan sensor may also be installed in the display unit 151 or implemented in the user input unit 123.

The microphone 122 is shown located at an end of the mobile terminal 100, but other locations are possible. If desired, multiple microphones may be implemented, with such an arrangement permitting the receiving of stereo sounds.

The interface unit 160 may serve as a path allowing the mobile terminal 100 to interface with external devices. For example, the interface unit 160 may include one or more of a connection terminal for connecting to another device (for example, an earphone, an external speaker, or the like), a port for near field communication (for example, an Infrared Data Association (IrDA) port, a Bluetooth port, a wireless LAN port, and the like), or a power supply terminal for supplying power to the mobile terminal 100. The interface unit 160 may be implemented in the form of a socket for accommodating an external card, such as Subscriber Identification Module (SIM), User Identity Module (UIM), or a memory card for information storage.

The second camera 121b is shown located at the rear side of the terminal body and includes an image capturing direction that is substantially opposite to the image capturing direction of the first camera unit 121a. If desired, second camera 121a may alternatively be located at other locations, or made to be moveable, in order to have a different image capturing direction from that which is shown.

The second camera 121b can include a plurality of lenses arranged along at least one line. The plurality of lenses may also be arranged in a matrix configuration. The cameras may be referred to as an "array camera." When the second camera 121b is implemented as an array camera, images may be captured in various manners using the plurality of lenses and images with better qualities.

As shown in FIG. 1C, a flash 124 is shown adjacent to the second camera 121b. When an image of a subject is captured with the camera 121b, the flash 124 may illuminate the subject.

As shown in FIG. 1B, the second audio output module 152b can be located on the terminal body. The second audio output module 152b may implement stereophonic sound functions in conjunction with the first audio output module 152a, and may be also used for implementing a speaker phone mode for call communication.

At least one antenna for wireless communication may be located on the terminal body. The antenna may be installed in the terminal body or formed by the case. For example, an antenna which configures a part of the broadcast receiving module 111 may be retractable into the terminal body. Alternatively, an antenna may be formed using a film attached to an inner surface of the rear cover 103, or a case that includes a conductive material.

A power supply unit 190 for supplying power to the mobile terminal 100 may include a battery 191, which is mounted in the terminal body or detachably coupled to an outside of the terminal body. The battery 191 may receive power via a power source cable connected to the interface unit 160. Also, the battery 191 can be recharged in a wireless manner using a wireless charger. Wireless charging may be implemented by magnetic induction or electromagnetic resonance.

The rear cover 103 is shown coupled to the rear case 102 for shielding the battery 191, to prevent separation of the battery 191, and to protect the battery 191 from an external impact or from foreign material. When the battery 191 is detachable from the terminal body, the rear case 103 may be detachably coupled to the rear case 102.

An accessory for protecting an appearance or assisting or extending the functions of the mobile terminal 100 can also be provided on the mobile terminal 100. As one example of an accessory, a cover or pouch for covering or accommodating at least one surface of the mobile terminal 100 may be provided. The cover or pouch may cooperate with the display unit 151 to extend the function of the mobile terminal 100. Another example of the accessory is a touch pen for assisting or extending a touch input to a touch screen.

A communication system which is operable with the variously described mobile terminals will now be described in more detail. Such a communication system may be configured to utilize any of a variety of different air interfaces and/or physical layers. Examples of such air interfaces utilized by the communication system include Frequency Division Multiple Access (FDMA), Time Division Multiple Access (TDMA), Code Division Multiple Access (CDMA), Universal Mobile Telecommunications System (UMTS) (including, Long Term Evolution (LTE), LTE-A(Long Term Evolution-Advanced)), Global System for Mobile Communications (GSM), and the like.

By way of a non-limiting example only, further description will relate to a CDMA communication system, but such teachings apply equally to other system types including a CDMA wireless communication system as well as OFDM(Orthogonal Frequency Division Multiplexing) wireless communication system. A CDMA wireless communication system generally includes one or more mobile terminals (MT or User Equipment, UE) 100, one or more base stations (BSs, NodeB, or evolved NodeB), one or more base station controllers (BSCs), and a mobile switching center (MSC). The MSC is configured to interface with a conventional Public Switched Telephone Network (PSTN) and the BSCs. The BSCs are coupled to the base stations via backhaul lines. The backhaul lines may be configured in accordance with any of several known interfaces including, for example, E1/T1, ATM, IP, PPP, Frame Relay, HDSL, ADSL, or xDSL. Hence, the plurality of BSCs can be included in the CDMA wireless communication system.

Each base station may include one or more sectors, each sector having an omni-directional antenna or an antenna pointed in a particular direction radially away from the base station. Alternatively, each sector may include two or more different antennas. Each base station may be configured to support a plurality of frequency assignments, with each frequency assignment having a particular spectrum (e.g., 1.25 MHz, 5 MHz, etc.).

The intersection of sector and frequency assignment may be referred to as a CDMA channel. The base stations may also be referred to as Base Station Transceiver Subsystems (BTSs). In some cases, the term "base station" may be used to refer collectively to a BSC, and one or more base stations. The base stations may also be denoted as "cell sites." Alternatively, individual sectors of a given base station may be referred to as cell sites.

A broadcasting transmitter (BT) transmits a broadcast signal to the mobile terminals 100 operating within the system. The broadcast receiving module 111 of FIG. 1A is typically configured inside the mobile terminal 100 to receive broadcast signals transmitted by the BT.

Global Positioning System (GPS) satellites for locating the position of the mobile terminal 100, for example, may cooperate with the CDMA wireless communication system. Useful position information may be obtained with greater or fewer satellites than two satellites. It is to be appreciated that other types of position detection technology, (i.e., location technology that may be used in addition to or instead of GPS location technology) may alternatively be implemented. If desired, at least one of the GPS satellites may alternatively or additionally be configured to provide satellite DMB transmissions.

The location information module 115 is generally configured to detect, calculate, or otherwise identify a position of the mobile terminal. As an example, the location information module 115 may include a Global Position System (GPS) module, a Wi-Fi module, or both. If desired, the location information module 115 may alternatively or additionally function with any of the other modules of the wireless communication unit 110 to obtain data related to the position of the mobile terminal.

A typical GPS module 115 can measure an accurate time and distance from three or more satellites, and accurately calculate a current location of the mobile terminal according to trigonometry based on the measured time and distances. A method of acquiring distance and time information from three satellites and performing error correction with a single satellite may be used. In particular, the GPS module may acquire an accurate time together with three-dimensional speed information as well as the location of the latitude, longitude and altitude values from the location information received from the satellites.

Furthermore, the GPS module can acquire speed information in real time to calculate a current position. Sometimes, accuracy of a measured position may be compromised when the mobile terminal is located in a blind spot of satellite signals, such as being located in an indoor space. In order to minimize the effect of such blind spots, an alternative or supplemental location technique, such as Wi-Fi Positioning System (WPS), may be utilized.

The Wi-Fi positioning system (WPS) refers to a location determination technology based on a wireless local area network (WLAN) using Wi-Fi as a technology for tracking the location of the mobile terminal 100. This technology typically includes the use of a Wi-Fi module in the mobile terminal 100 and a wireless access point for communicating with the Wi-Fi module.

The Wi-Fi positioning system may include a Wi-Fi location determination server, a mobile terminal, a wireless access point (AP) connected to the mobile terminal, and a database stored with wireless AP information.

The mobile terminal connected to the wireless AP may transmit a location information request message to the Wi-Fi location determination server. The Wi-Fi location determination server extracts the information of the wireless AP connected to the mobile terminal 100, based on the location information request message (or signal) of the mobile terminal 100. The information of the wireless AP may be transmitted to the Wi-Fi location determination server through the mobile terminal 100, or may be transmitted to the Wi-Fi location determination server from the wireless AP.

The information of the wireless AP extracted based on the location information request message of the mobile terminal 100 may include one or more of media access control (MAC) address, service set identification (SSID), received signal strength indicator (RSSI), reference signal received Power(RSRP), reference signal received quality(RSRQ), channel information, privacy, network type, signal strength, noise strength, and the like.

The Wi-Fi location determination server may receive the information of the wireless AP connected to the mobile terminal 100 as described above, and may extract wireless AP information corresponding to the wireless AP connected to the mobile terminal from the pre-established database. The information of any wireless APs stored in the database may be information such as MAC address, SSID, RSSI, channel information, privacy, network type, latitude and longitude coordinate, building at which the wireless AP is located, floor number, detailed indoor location information (GPS coordinate available), AP owner's address, phone number, and the like. In order to remove wireless APs provided using a mobile AP or an illegal MAC address during a location determining process, the Wi-Fi location determination server may extract only a predetermined number of wireless AP information in order of high RSSI.

Then, the Wi-Fi location determination server may extract (analyze) location information of the mobile terminal 100 using at least one wireless AP information extracted from the database.

A method for extracting (analyzing) location information of the mobile terminal 100 may include a Cell-ID method, a fingerprint method, a trigonometry method, a landmark method, and the like.

The Cell-ID method is used to determine a position of a wireless AP having the largest signal strength, among peripheral wireless AP information collected by a mobile terminal, as a position of the mobile terminal. The Cell-ID method is an implementation that is minimally complex, does not require additional costs, and location information can be rapidly acquired. However, in the Cell-ID method, the precision of positioning may fall below a desired threshold when the installation density of wireless APs is low.

The fingerprint method is used to collect signal strength information by selecting a reference position from a service area, and to track a position of a mobile terminal using the signal strength information transmitted from the mobile terminal based on the collected information. In order to use the fingerprint method, it is common for the characteristics of radio signals to be pre-stored in the form of a database.

The trigonometry method is used to calculate a position of a mobile terminal based on a distance between coordinates of at least three wireless APs and the mobile terminal. In order to measure the distance between the mobile terminal and the wireless APs, signal strength may be converted into distance information, Time of Arrival (ToA), Time Difference of Arrival (TDoA), Angle of Arrival (AoA), or the like may be taken for transmitted wireless signals.

The landmark method is used to measure a position of a mobile terminal using a known landmark transmitter.

In addition to these position location methods, various algorithms may be used to extract (analyze) location information of a mobile terminal. Such extracted location information may be transmitted to the mobile terminal 100 through the Wi-Fi location determination server, thereby acquiring location information of the mobile terminal 100.

The mobile terminal 100 can acquire location information by being connected to at least one wireless AP. The number of wireless APs required to acquire location information of the mobile terminal 100 may be variously changed according to a wireless communication environment within which the mobile terminal 100 is positioned.

As previously described with regard to FIG. 1A, the mobile terminal may be configured to include short-range communication techniques such as Bluetooth™, Radio Frequency Identification (RFID), Infrared Data Association (IrDA), Ultra Wideband (UWB), ZigBee, Near Field Communication (NFC), Wireless USB(Wireless Universal Serial Bus), and the like.

A typical NFC module provided at the mobile terminal supports short-range wireless communication, which is a non-contactable type of communication between mobile terminals and generally occurs within about 10 cm. The NFC module may operate in one of a card mode, a reader mode, or a P2P mode. The mobile terminal 100 may further include a security module for storing card information, in order to operate the NFC module in a card mode. The security module may be a physical medium such as Universal Integrated Circuit Card (UICC) (e.g., a Subscriber Identification Module (SIM) or Universal SIM (USIM)), a secure micro SD and a sticker, or a logical medium (e.g., embedded Secure Element (SE)) embedded in the mobile terminal. Single Wire Protocol (SWP)-based data exchange may be performed between the NFC module and the security module.

In a case where the NFC module operates in a card mode, the mobile terminal may transmit card information on a general IC card to the outside. More specifically, if a mobile terminal having card information on a payment card (e.g, a credit card or a bus card) approaches a card reader, a short-range mobile payment may be executed. As another example, if a mobile terminal which stores card information on an entrance card approaches an entrance card reader, an entrance approval procedure may start. A card such as a credit card, a traffic card, or an entrance card may be included in the security module in the form of applet, and the security module may store card information on the card mounted therein. Card information for a payment card may include any of a card number, a remaining amount and usage history, and the like. Card information of an entrance card may include any of a user's name, a user's number (e.g., undergraduate number or staff number), an entrance history, and the like.

When the NFC module operates in a reader mode, the mobile terminal can read data from an external tag. The data received from the external tag by the mobile terminal may be coded into the NFC Data Exchange Format defined by the NFC Forum. The NFC Forum generally defines four record types. More specifically, the NFC Forum defines four Record Type Definitions (RTDs) such as smart poster, text, Uniform Resource Identifier (URI), and general control. If the data received from the external tag is a smart poster type, the controller may execute a browser (e.g., Internet browser). If the data received from the external tag is a text type, the controller may execute a text viewer. If the data received from the external tag is a URI type, the controller may execute a browser or originate a call. If the data received from the external tag is a general control type, the controller may execute a proper operation according to control content.

In some cases in which the NFC module operates in a P2P(Peer-to-Peer) mode, the mobile terminal can execute P2P communication with another mobile terminal. In this case, Logical Link Control Protocol (LLCP) may be applied to the P2P communication. For P2P communication, connection may be generated between the mobile terminal and another mobile terminal. This connection may be categorized as a connectionless mode which ends after one packet is switched, and a connection-oriented mode in which packets are switched consecutively. For a typical P2P communication, data such as an electronic type name card, address information, a digital photo and a URL, a setup parameter for Bluetooth connection, Wi-Fi connection, etc. may be switched. The P2P mode can be effectively utilized in switching data of a small capacity, because an available distance for NFC communication is relatively short.

Further preferred embodiments will be described in more detail with reference to additional drawing figures. It is understood by those skilled in the art that the present features can be embodied in several forms without departing from the characteristics thereof.

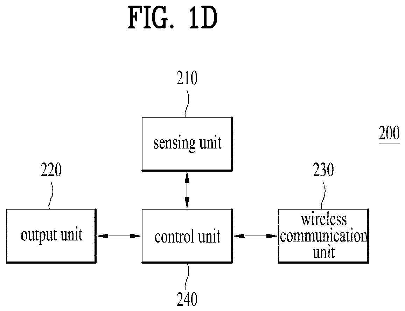

FIG. 1D is a block diagram to describe a car related to the present invention.

Referring to FIG. 1D, a car 200 can include a sensing unit 210, an output unit 220, a wireless communication unit 230 and a control unit 250. Since the components shown in FIG. 1D are not mandatory to configure a car, the car 200 mentioned in the description of the present invention may have components more or less than the above-mentioned components.

The sensing unit 210 senses various inputs from a user and an environment of a car and is then able to deliver a sensing result to enable the controller 150 to perform an operation according to the sensing result. The sensing unit 210 may include at least one sensor configured to sense at least one of an information in the car, an information on a surrounding environment of the car, and an input signal from a user. For instance, unlike the former sensing unit of the mobile terminal, the sensing unit 210 may include various sensors configured to sense states of the car. For instance, according to the present invention, the sensing unit 210 may include at least one of a weight detection sensor, a motion detection sensor, an ultrasonic sensor, an IR (infrared) sensor, a pressure sensor, a speed sensor, an image sensor, a moisture detection sensor, a fire monitoring sensor, and the like. Moreover, according to the present invention, various sensors included in the former sensing unit shown in FIG. 1A can be included in the sensing unit 210.

According to the present invention, the image sensor may correspond to a camera. According to the present invention, the car 200 may include a plurality of cameras. For instance, the car 200 may have the camera provided to at least one of a front side, a lateral side, and a rear side of the car 200. For instance, the car may have at least one camera provided to an inside of the car 200.

The output unit 220 may output various signals generated from the car 200. In particular, the output unit 220 can output a signal generated from the control unit 240 through a display unit, an audio output unit, a laser applying unit, and/or the like.

The display unit can output information processed in the car 200. For instance, the display unit can display a running screen information of an application program run in the car 200. The audio output unit can output an audio generated from the car 200. The laser applying unit can output a laser signal generated by the control unit 240.

The wireless communication unit 230 performs communications with the mobile terminal 100 or an external device using various protocols and is able to transmit/receive data. The wireless communication unit 230 can transmit/receive digital data such as contents and the like by accessing a network by wireless. For instance, the wireless communication unit 230 may include a wireless Internet module, a short range communication module and the like.

The wireless Internet module is configured to facilitate wireless Internet access. The wireless Internet module 113 may transmit and/or receive wireless signals via communication networks according to wireless Internet technologies. Examples of such wireless Internet access include Wireless LAN (WLAN), Wireless Fidelity (Wi-Fi), Wi-Fi Direct, Digital Living Network Alliance (DLNA), Wireless Broadband (WiBro), Worldwide Interoperability for Microwave Access (WiMAX), High Speed Downlink Packet Access (HSDPA), HSUPA(High Speed Uplink Packet Access), Long Term Evolution (LTE), LTE-A (Long Term Evolution-Advanced), and the like. The wireless Internet module may transmit/receive data according to one or more of such wireless Internet technologies, and other Internet technologies as well.

The short range communication module is configured to facilitate short range communications. Suitable technologies for implementing such short range communications include BLUETOOTH™, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless USB (Wireless Universal Serial Bus), and the like. The short range communication module in general supports wireless communications between an insole and a wireless communication system, communications between one insole and another insole, or communications between one insole and a network where another insole is located, via wireless area networks. One example of the wireless area networks is a wireless personal area networks.

The control unit 240 can control overall operations of the car 200. The control unit 240 can provide or process information or functions required for the car 200 by processing the signals, data, information and the like inputted or outputted through the aforementioned components or launching application programs saved in the memory. For instance, the control unit 240 may include an ECU (electronic control unit) of the car 200.

At least some of the aforementioned components can operate cooperatively in order to implement operations, controls or controlling methods of the car 200 according to various embodiments mentioned in the following description. According to one embodiment of the present invention, the operations performed by the car 200 can be controlled by the control unit 240. For clarity of the following description with reference to the accompanying drawings, such operations may be generically described as performed/controlled by the car 200.

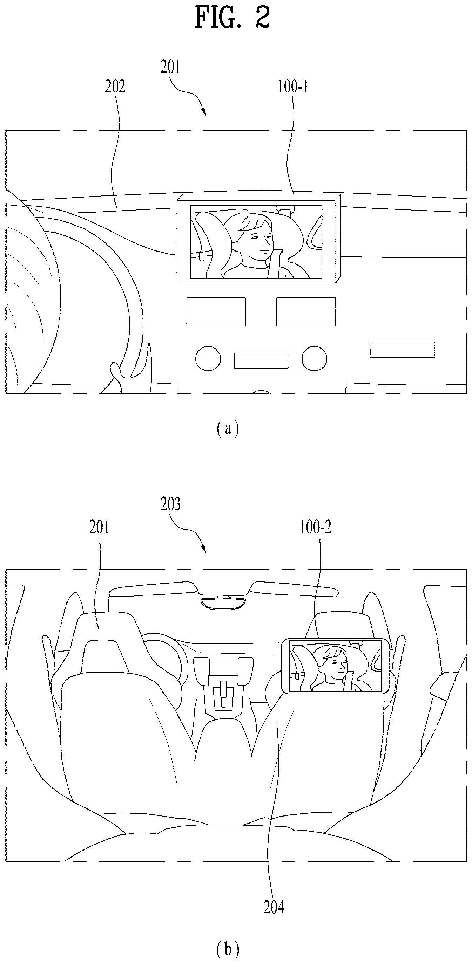

FIG. 2 is a diagram for one example of a mobile terminal mounted in a car according to one embodiment of the present invention.

FIG. 2 (a) is a diagram to describe a driver seat 201 of a car, and FIG. 2 (b) is a diagram to describe a rear seat. According to one embodiment of the present invention, the following description is made on the assumption that a driver seat terminal 100-1 fixed to a center fascia 202 of the driver seat 201 and a rear seat terminal 100-2 fixed to a rear surface or headrest of a passenger seat 2104 are provided, by which the present invention is non-limited. In the following description, the driver seat terminal 100-1 and the rear seat terminal 100-2 may be generically named a mobile terminal 100.

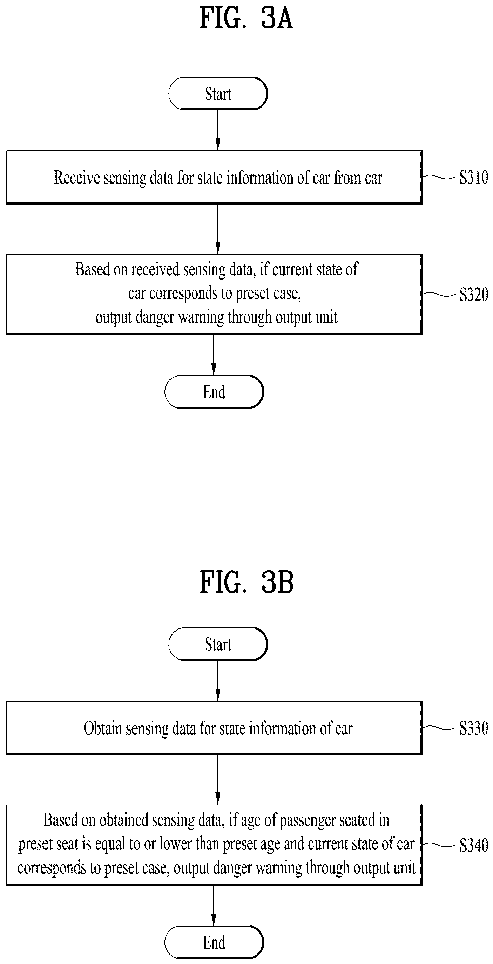

According to one embodiment of the present invention, it is a matter of course that the driver seat terminal 100-1 and the rear seat terminal 100-2 can exchange data with each other. And, assume that the driver seat terminal 100-1 and the rear seat terminal 100-2 can receive a driving information of a car or sensing information of a car from OBD/OBD2 (On Board Diagnostics/OBD2) terminal of the car directly (or, from the wireless communication module connected to the OBD/OBD2 terminal). Moreover, according to an embodiment, the mobile terminal 100 can transmit a control signal to a car or a configuration module in the car. A method of controlling a mobile terminal is described in detail with reference to FIG. 3 as follows.

FIG. 3A is a flowchart for a method of controlling a mobile terminal 100 for safety of a passenger according to one embodiment of the present invention. In this case, the mobile terminal 100 may include the driver seat terminal 100-1, the rear seat terminal 100-2, or the mobile terminal 100 held by a passenger.

Referring to FIG. 3A, the controller 180 may receive sensing data of a state information of a car from the car [S310]. For instance, the received sensing data may include at least one of a location of the car, a data indicating whether a door corresponding to a preset seat is open, an image obtained by a camera provided to the car, an image obtained by a camera corresponding to the preset seat, a data indicating whether a safety belt corresponding to the preset seat is worn, a data indicating a wearing length of the safety belt corresponding to the preset seat, a data obtained by a weight detection sensor provided to the preset seat, a data obtained by a sensor provided to the door corresponding to the preset seat, and the like.

Subsequently, based on the received sensing data, if a current state of the car corresponds to a preset case, the controller 180 can output a warning through the output unit [S320].

FIG. 3B is a flowchart for a method of controlling the car 200 for safety of a passenger according to one embodiment of the present invention.

Referring to FIG. 3B, the car 200 can obtain sensing data indicating a state information of the car [S330]. For instance, this sensing data may be identical to the former sensing data described with reference to FIG. 3A.

Subsequently, based on the obtained sensing data, if an age of a passenger seated on a preset seat is equal to or lower than a preset age and a current state of the car 200 corresponds to a preset case, the car 200 can output a warning through the output unit [S340].

Meanwhile, the car 200 may send the obtained sensing data to the mobile terminal 100 [not shown in FIG. 3]. The car 200 receives a control signal generated from the mobile terminal 100 and may be then able to output a danger warning through the output unit based on the received control signal.

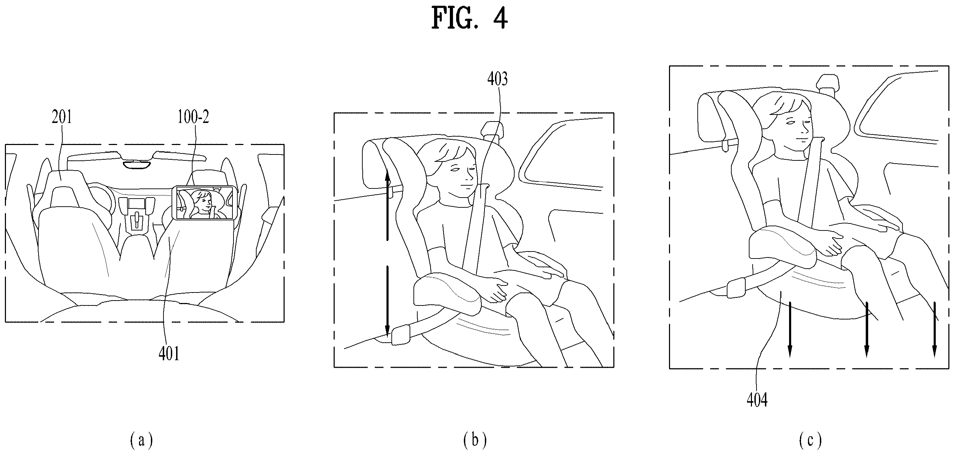

In the following description, if a state of a car corresponds to a state dangerous to a child, a method of controlling a car in mode safe for the child is described in detail with reference to FIGs. 4 to 20. According to the following embodiments described with reference to FIGs. 4 to 20, a passenger is assumed as a child. According to an embodiment, this control method is applicable to a case that a passenger is a normal adult or an old person as well.

According to the following embodiments described with reference to FIGs. 4 to 20, assume that the controller 180 of the mobile terminal generates a car control signal. Yet, as mentioned in the foregoing description, since the car 200 includes the control unit of its own, it may be possible to control the car 200 by generating a control signal from the car based on a signal sensed from the car.

FIG. 4 is a diagram for a control method of determining whether a passenger is a child according to one embodiment of the present invention. For instance, referring to FIG. 4 (a), the controller 180 receives an image obtained by a camera corresponding to a preset seat and is then able to recognize a face of a passenger from the received image. For instance, the camera may be included in the mobile terminal and provided to a rear seat terminal 100-2. Moreover, for instance, the camera may include a camera directly installed in the car 200 and an image obtained by the camera installed in the car 200 may be sent to the mobile terminal 100. In this case, a location of the camera of the mobile terminal 100 or a location of the camera installed in the car 200 may correspond to a rear surface of a front seat. And, the preset seat may correspond to a seat in which a child is seated.

If the recognized face matches a child's face saved in the mobile terminal 100, the controller 180 can determine that the passenger corresponds to a child. If the recognized face fails to match the face saved in the mobile terminal 100, the controller 180 estimates an age from the recognized face and may be then able to determine that the passenger corresponds to a child.

For another instance, referring to FIG. 4 (b), the controller 180 can receive data corresponding to a wearing length of a safety belt 403 corresponding to a preset seat of the car 200. If the wearing length of the safety belt 403 belongs to a preset length range, the controller 180 can determine that a passenger corresponds to a child. In this case, since a body of an adult is larger than that of a child, it may be necessary to further fasten the safety belt to use. Thus, if a length of the fastened safety belt is smaller than a prescribed length, it may be able to determine that the safety belt is used by a child.

For further instance, referring to FIG. 4 (c), the controller 180 can receive data obtained by a weight detection sensor 404 provided to a preset seat of the car 200. If the data obtained by the weight detection sensor 404 belongs to a preset weight range, the controller 180 can determine that a passenger corresponds to a child. For example, if the data obtained by the weight detection sensor 404 is equal to or smaller than 20 Kg, the controller 180 can determine that a passenger is child.

In addition, if a preset external device is located within the car, which is not shown in FIG. 4, the controller 180 can determine that a child is inside the car 200. In this case, the external device may correspond to a smart watch that may be registered at the mobile terminal 100 or the car 200. For instance, based on a strength of a signal transceived through the wireless communication unit, if a distance between the external device and the mobile terminal 100 belongs to a preset distance range, the controller 180 can determine that the external device is located inside the car 200. Moreover, for instance, if a distance between the wireless communication unit provided to the car 200 and the external device belong to a preset distance range, the car 200 can determine that the external device is located inside the car 200.

Meanwhile, based on a strength of a signal transceived through the wireless communication unit of the mobile terminal 100 or the car 200, the controller 180 can determine whether a child currently wearing an external device is seated in a passenger seat or a rear seat. For instance, when the mobile terminal 100 is located at a front seat or the wireless communication unit of the car 200 is located at the front seat, if a strength of a transceived signal exceeds a preset signal value, the controller 180 can determine that the child is seated in the passenger seat.

Meanwhile, as mentioned in the foregoing description of the embodiment with reference to FIG. 4, if a child is inside a car, the controller 180 can control the mobile terminal 100 or the car to enter a safety lock mode. In this case, the safety lock mode means the mode for securing safety of a child inside a car on driving the car or safety of a child on getting off the car. According to the embodiment mentioned in the foregoing description, when a child is inside a car, the safety lock mode is entered. Yet, if it is detected that a child is inside a car or that a car is driven (e.g., a case that a car is moving over 10 km/h), the safety lock mode may be entered. Such a safety lock mode may be controlled not to be released until a car stops after entering the safety lock mode. For example, the safety lock mode may be controlled not to be released until a car speed is lowered below 10 km/h.

Moreover, it may be able to enter a safety lock mode based on a user's entry command. The safety lock mode of one embodiment of the present invention is described in detail as follows.

### Safety Lock Mode - Function for Child on Board

According to one embodiment of the present invention, when a child is on board, it is proposed to output a children's content in order to restrict the child from acting dangerously.

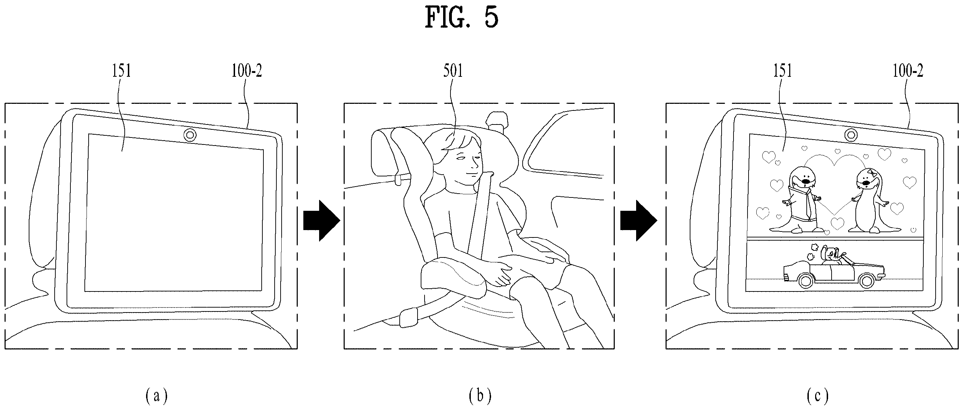

FIG. 5 is a diagram for a control method of outputting a children's content, when a child is on board, according to one embodiment of the present invention. According to the embodiment shown in FIG. 5, assume that the mobile terminal 100 corresponds to a rear seat terminal 100-2.

Referring to FIG. 5, while a power of the rear seat terminal 100-2 is turned off [FIG. 5 (a)], the controller 180 can detect whether a child 501 is on board [FIG. 5 (b)]. Regarding this, it is able to determine whether the child 501 is on board in the manner described with reference to FIG. 4.

If it is determined that the child 501 is on board, referring to FIG. 5 (c), the controller 180 can automatically play a children's content through a display unit 151 of the rear seat terminal 100-2.

On the other hand, while an adult's content is played through the rear seat terminal 100-2, if it is detected that the child 501 is on board, the controller 180 can automatically play a children's content [not shown in FIG. 5]. According to the embodiment described with reference to FIG. 5, such a control is controlled by the controller 180 of the mobile terminal. Optionally, such a control can be also controlled by the control unit 240 provided to the car 200.

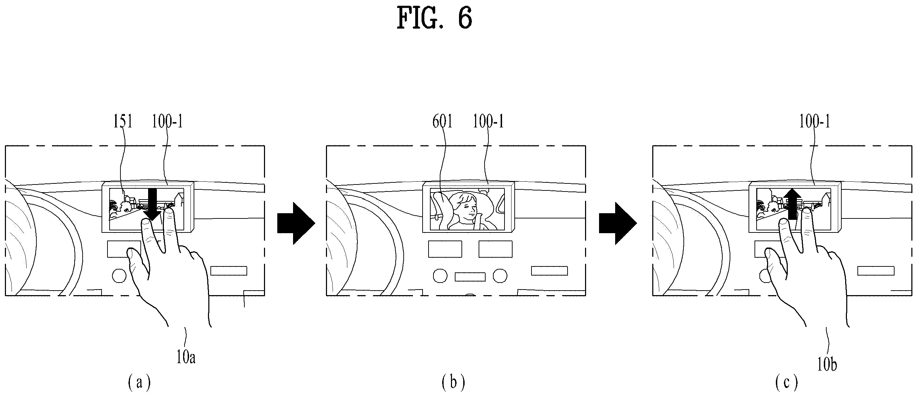

FIG. 6 is a diagram for a control method of easily watching a rear seat shot image from a driver seat, when a child is on board, according to one embodiment of the present invention. According to the embodiment described with reference to FIG. 6, assume that the mobile terminal 100 corresponds to a front seat terminal 100-1.

Referring to FIG. 6 (a), the controller 180 can output navigation through the touchscreen 151 while a car is driven. In doing so, if the car stops for a while due to a traffic light or the like, the controller 180 can receive a 1^{st} input signal 10a. In this case, the 1^{st} input signal 10a may include a touch input to the touchscreen 151, a gesture input, or the like. For instance, the 1^{st} input signal 10a may correspond to a touch & drag input of moving in a bottom direction from 3 points simultaneously. Moreover, the 1^{st} input signal 10a may include various signals.

Referring to FIG. 6 (b), in response to the 1^{st} input signal 10a, the controller 180 can switch the touchscreen 151 to a rear seat shot image 601 from a currently navigation screen. In this case, the rear seat shot image 601 may correspond to an image shot by real-time through a camera attached to a back surface of a front seat of the car 200 or a camera provided to a front surface of the mobile terminal 100. In particular, through the rear seat shot image 601, a driver can monitor an appearance of a child seated in a rear seat of the car 200.

For instance, referring to FIG. 6 (c), if a 2^{nd} input signal 10b is received, the controller 180 can switch the touchscreen 151 to the navigation screen again from the rear seat shot image 601 currently outputted through the touchscreen 151. In this case, the 2^{nd} input signal 10b may include a touch input to the touchscreen 151, a gesture input, or the like. For instance, the 2^{nd} input signal 10b may correspond to a touch & drag input of moving in a top direction from 3 points simultaneously.

For another example, based on a speed of the car 200 sensed through the speed detection sensor, if a stop state is changed into a moving state, the controller 180 can switch the touchscreen 151 to the navigation screen again from the rear seat shot image 601 currently outputted through the touchscreen 151 [not shown in FIG. 6]. For another example, after the touchscreen 151 has been switched to the rear seat shot image 601, if a preset time expires, the controller 180 can switch the touchscreen 151 to the navigation screen again from the rear seat shot image 601 currently outputted through the touchscreen 151. Through this, the driver can monitor the state of the child seated in the rear seat without being interrupted on driving the car.

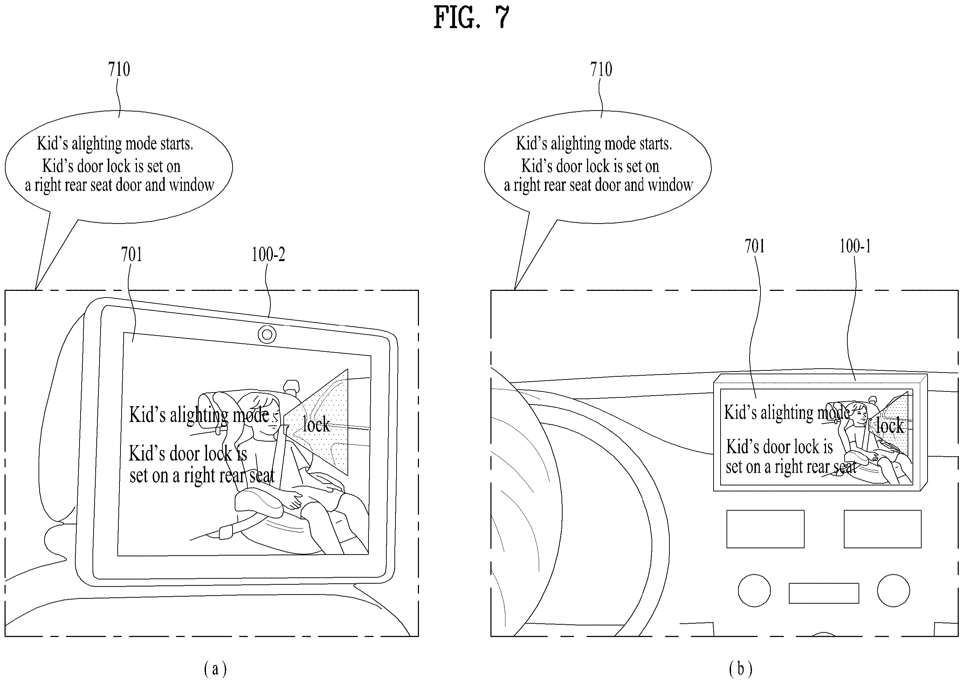

A control method of locking a door of a car automatically to protect a child is described in detail with reference to FIG. 7 as follows.

FIG. 7 is a diagram for a control method of automatically controlling doors of a car according to one embodiment of the present invention.

First of all, as mentioned in the foregoing description with reference to FIG. 4, if it is determined that a child is inside a car (or, on board), the controller 180 can generate a control signal for switching the car to a locked state. Moreover, the controller 180 sends a control signal to the car 200 and the car 200 is then able to control itself based on the received control signal.

For instance, referring to FIG. 7 (a) and FIG. 7 (b), the car 209 switches a door of a rear seat to a locked state and is able to output a voice message 710 such as 'Kid's door lock is set for a right rear seat door and window.' And, the controller 180 can output the voice message 710 through the audio output unit. Moreover, the controller 180 can output a visual content corresponding to 'kid's on-board mode' 701 through a rear seat terminal 100-2 or a front seat terminal 100-1.

On the other hand, if a control signal is received from the mobile terminal 100, the car 200 can control a door or window of a rear seat, in which a child is seated, to be controlled from a driver seat only [not shown in FIG. 7]. Meanwhile, according to the embodiment described with reference to FIG. 7, the mobile terminal 100 controls the car 200. Moreover, the car 200 can be controlled by the control unit provided to the car 200.

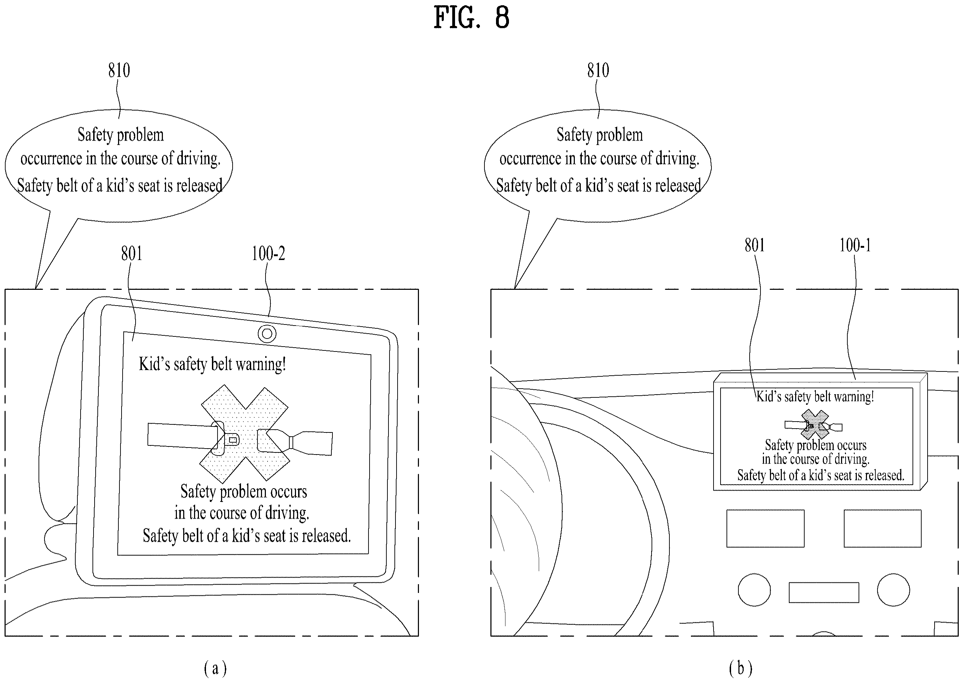

FIG. 8 is a diagram for a control method of detecting a release of a safety belt and then outputting a danger warning based on the detected release according to one embodiment of the present invention.

Referring to FIG. 8, the car 200 can sense a not-wearing-safety-belt signal indicating that a safety belt fails to be worn. For instance, the not-wearing-safety-belt signal can be detected while a locking part of a safety belt is not locked. Moreover, the car 200 can send the not-wearing-safety-belt signal to the mobile terminal 100.

In this case, based on the received not-wearing-safety-belt signal, the controller 180 can generate a danger warning signal. The controller 180 can control the danger warning signal to be sent to the car 200. Having received the danger warning signal, the car 200 can control itself.

Therefore, referring to FIG. 8 (a) and FIG. 8 (b), the controller 180 or the car 200 can output a voice message 810 such as 'Safety problem occurs on driving. A safety belt of a kid's seat is released.' Moreover, the controller 180 can output a visual content corresponding to 'Kind's safety belt warning' 801 through the rear seat terminal 100-2 or the front seat terminal 100-1.

Meanwhile, according to the embodiment described with reference to FIG. 8, the mobile terminal 100 controls the car 200. Moreover, the car 200 can be controlled by the control unit provided to the car 200.

In the following description, when a child on board gets off a car, a function of a safety lock mode is explained in detail.

### Safety Lock Mode - Functions for Child's Alighting

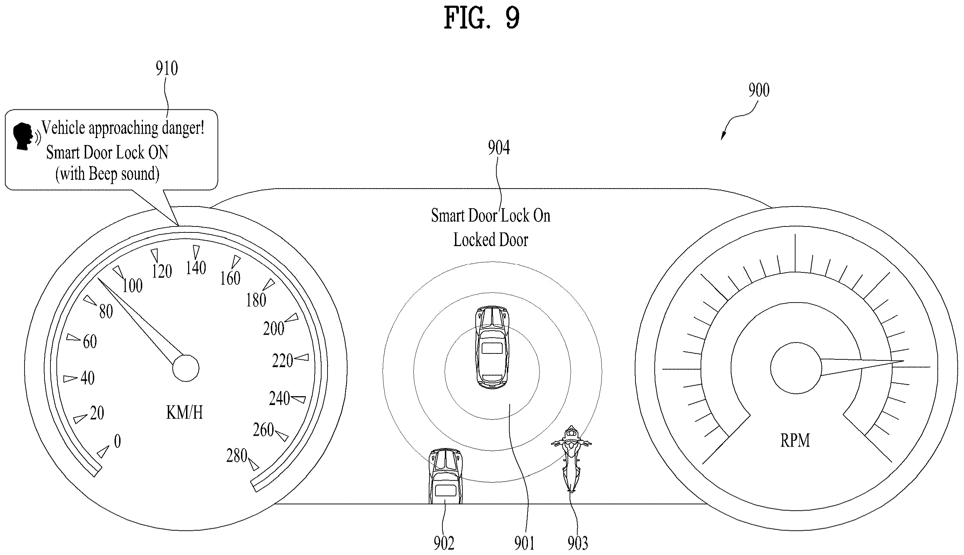

According to one embodiment of the present invention, when a child intends to get off a car in safety lock mode, it is proposed to detect a danger around the car and to launch a notification function or an auto-lock hold function appropriate for the detected danger. This is described in detail with reference to FIGs. 9 to 11 as follows.

FIG. 9 is a diagram for a control method of detecting a movement of another car around a user-occupant car and giving a warning by outputting the detected movement to a dashboard according to one embodiment of the present invention.

Referring to FIG. 9, a dashboard 900 of a display type is illustrated. Although FIG. 9 shows one example that a warning notification is outputted to the dashboard 900, it is apparent that the same function can be enabled through the front seat terminal 100-1 or the rear seat terminal 100-2 mentioned in the foregoing description.

First of all, the controller 180 may be able to detect nearby cars or vehicles in various ways. In this case the nearby vehicles may include various transportation means such as cars, motorcycles, trucks, buses, bicycles, and the like. For instance, the controller 180 may detect a motion of travelling vehicles by analyzing an image received through the camera 121 provided to a front surface of the rear-seat terminal 100-2.

Alternatively, the car 200 detects motions of other vehicles using such a device provided to the car 200 as a camera, a motion detection sensor, an ultrasonic sensor and the like and is then able to send the detected motions of other vehicles to the mobile terminal 100. In doing so, the camera or the motion detection sensor provided to the car 200 is installed on an outer surface of the car 200 so as to detect objects located in all directions centering on the car 200. For instance, the all directions centering on the car 200 may include front, lateral direction and rear directions of the car 200.

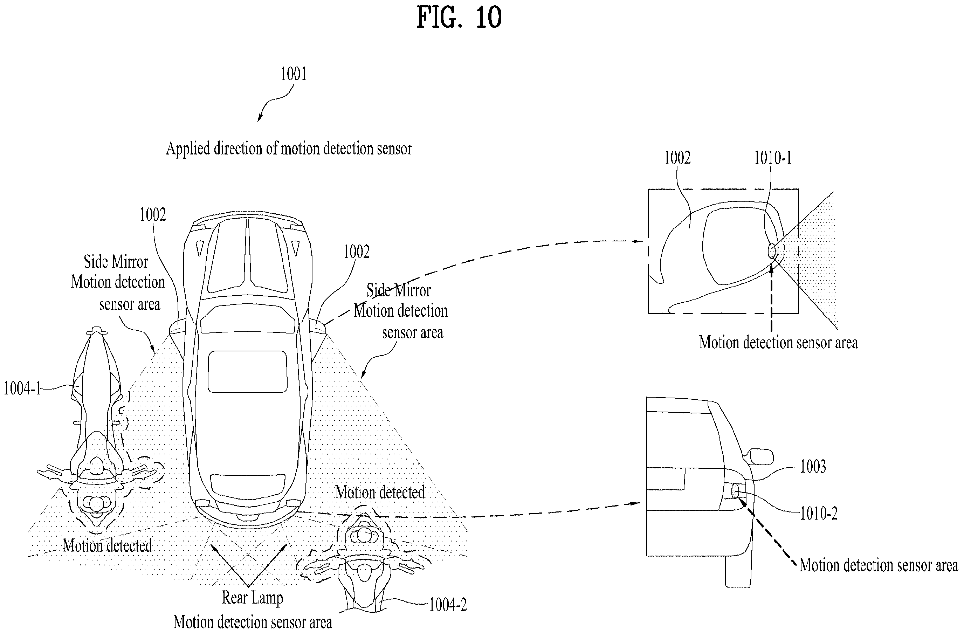

Locations of the ultrasonic sensor, the motion detection sensor and the camera provided to the car are described in detail with reference to FIG. 10 as follows.

FIG. 10 is a diagram of installation locations and facing directions of sensors and/or cameras possibly provided to a car according to one embodiment of the present invention.

In FIG. 10, the motion detection sensor is taken as one example, by which the present embodiment is non-limited. And, the location of the motion detection sensor may correspond to the location of the camera.

In particular, FIG. 10 is a lay out of a car 1001 ridden by a user. When a door is opened, a motion of a vehicle running from a rear side of a car is important. Hence, the motion detection sensor or the camera may be installed to face a rear direction.

Regarding the installed location, according to one embodiment of the present invention, it is proposed that the motion detection sensor or the camera is installed to be adjacent to at least one side mirror 1002 or at least one rear lamp 1003. The reason for this is that various detection coverage areas can be formed at the installed locations.

For instance, referring to FIG. 10, the car 200 can detect a vehicle 1004-1 located in a lateral direction of the car 200 through a sensor 1010-1 provided to the at least one side mirror 1002. And, the car 200 is able to detect a vehicle 1004-2 approaching a rear side of the car 200 through a sensor 1010-2 provided to the at least one rear lamp 1003.

Referring now to FIG. 9, the car 200 recognizes a distance from a different vehicle and is then able to send the recognized distance to the mobile terminal 100. In this case, the controller 180 generates a warning notification signal, which will be provided by the car 200, based on the motion of the detected different vehicle and is then able to send the generated warning notification signal to the car 200.

Referring to FIG. 9, the car 200 can output an indicator, which indicates that a door or window of a rear seat corresponds to a lock mode because of a child on board, to a preset location of the dashboard 900. And, the car 200 can output a warning sound 910 through the audio output unit by grading warning sounds depending on a distance between the car 200 and a different vehicle or a distance between the car 200 and a person. For instance, if the distance between the car 200 and the different vehicle (or person) is about 5 to 6 meters, the car 200 can output a warning sound of a low level. For another instance, if the distance between the car 200 and the different vehicle (or person) is about 4 to 5 meters, the car 200 can output a warning sound of a middle level. For further instance, if the distance between the car 200 and the different vehicle (or person) is about 0 to 4 meters, the car 200 can output a warning sound of a high level. Moreover, the distance settings related to the warning sound output levels can be configured in various ways.

The car 200 detects a location of a different vehicle or a location of a person and is then able to output the detected locations to the dashboard 900. For instance, the car 200 can visually output locations of different vehicles (or persons) 902 and 903 with reference to a current location of the car 200.

According to one embodiment of the present invention, the controller 180 distinguishes types of detected vehicles and is then able to output the distinguished types to the dashboard 900 of the car 200. For instance, it is proposed that the detected vehicle is outputted by being distinguished as a motorcycle or an automobile.

In case of analyzing a result of the detection by the sensor provided to the car 200 or an image received from the camera, the controller 180 can distinguish the motorcycle and the automobile from each other based on a width or height of the corresponding vehicle. In particular, the motorcycle mostly has a width of about 1.0 m and a height of about 1.5 m, while the automobile has a width of at least 2 m and a height of at least 2 m.

In addition, if the controller 180 determines that a detected different vehicle is dangerous to the driving of the car 200, the controller 180 may be able to activate a lock device so that a door of a rear seat cannot be opened. Moreover, the controller 180 may set a door to be opened from a driver seat only.

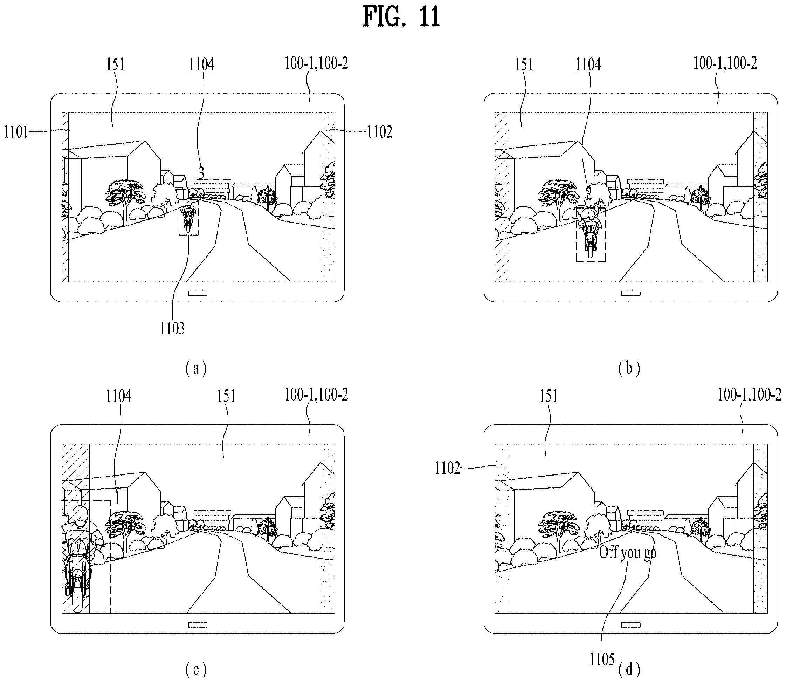

A detection not through a motion detection sensor but through a camera is described in detail with reference to FIG. 11 as follows.

FIG. 11 is a diagram for a control method of outputting a warning based on a car detected through a camera and a movement of the detected car according to one embodiment of the present invention.

Referring to FIG. 11, the mobile terminal can output a notification based on a rear image of a car obtained through a camera installed in the car. In this case, the outputted notification may output one of a driver seat terminal 100-1 and a rear seat terminal 100-2 or may output both of the two terminals. Moreover, if a user currently wears HMD (head-mounted display), the notification may be outputted through a display of the HMD [not shown in FIG. 11].

First of all, the car 200 may shoot an image of a different vehicle located within a view angle area through a camera provided to a rear side of the car 200. The car 200 sends the shot image to the mobile terminal 100 and the controller 180 is then able to output the shot image through the display unit 151. In this case the different vehicle may include one of various transportation means such as cars, motorcycles, trucks, buses, bicycles, and the like.

In doing so, the controller 180 can display a dangerous alighting indicator 1101 and a safe alighting indicator 1102, which are provided to indicate a location of a different vehicle currently approaching the car 200. In this case, the dangerous alighting indicator 1101 may correspond to an indicator indicating a situation that it is dangerous for a passenger to get off the car 200. For instance, the dangerous alighting indicator 1101 may be displayed as a red bar. If a different vehicle approaches closer to the car 200, the controller 180 may display the dangerous alighting indicator 1101 in a manner of thickening a color of the dangerous alighting indicator 1101 or widening a thickness of the dangerous alighting indicator 1101.

Moreover, the safe alighting indicator 1102 may correspond to an indicator indicating a situation that it is safe for a passenger to get off the car 200. For instance, the safe alighting indicator 1102 may be displayed as a green bar.

Referring to FIG. 11 (a), this may correspond to a situation that a different vehicle 1103 is approaching from a right rear side of the car 200. In this case, based on a distance between the different vehicle 1103 and the car 200, the controller 180 determines that a level of danger is low despite being dangerous in case of alighting. Hence, the controller 180 can display the dangerous alighting indicator 1101 in a direction, in which the different vehicle 1103 is located, in a manner of narrowing the dangerous alighting indicator 1101 or thinning the red color of the dangerous alighting indicator 1101.

Referring to FIG. 11 (b), this may correspond to a situation that the different vehicle 1103 is approaching from a right rear side of the car 200. And, the different vehicle 1103 gets closer to the car 200 than shown in FIG. 11 (a). In this case, the controller 180 determines that a level of danger is middle. Hence, the controller 180 can display the dangerous alighting indicator 1101 in a direction, in which the different vehicle 1103 is located, in a manner of widening the dangerous alighting indicator 1101 or further thinning the red color of the dangerous alighting indicator 1101.

Referring to FIG. 11 (c), this may correspond to a situation that the different vehicle 1103 is approaching right behind the car 200. In this case, the controller 180 determines that a level of danger is high. Hence, the controller 180 can display the dangerous alighting indicator 1101 in a direction, in which the different vehicle 1103 is located, in a manner of widening the dangerous alighting indicator 1101 to the maximum or representing the dangerous alighting indicator 1101 in relatively red.

Referring to FIG. 11 (d), this may correspond to a situation that the different vehicle 1103 is not sensed by the camera of the car 200. In this case, the controller 180 determines that there is no alighting danger and is then able to display the safe alighting indicator 1102 on both edges of the display unit 151. In this case, the car 200 can output an indicator 1105 indicating that alighting is now possible.

On the other hand, referring to FIGs. 11 (a) to 11 (c), if a different vehicle approaches, the controller 180 can determine a speed of the different vehicle. Based on the speed of the different vehicle, the controller 180 may display a timer 1104 indicating a passing time of the different vehicle on the display unit. Through this, a passenger may recognize a time to get off the car.

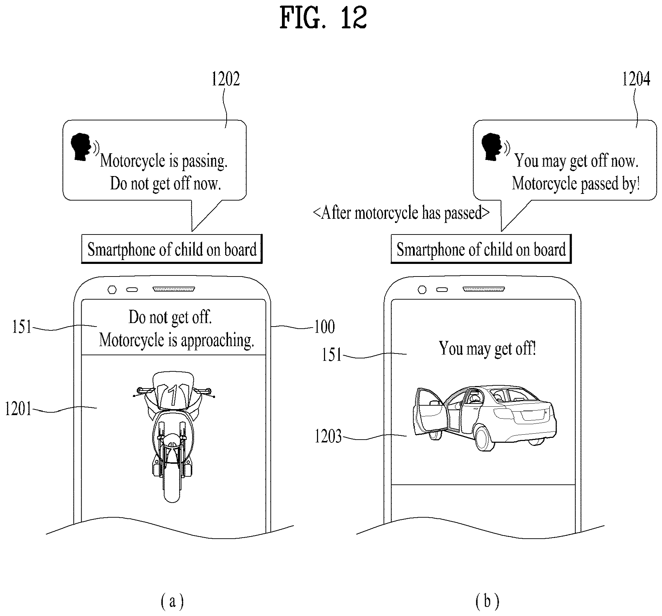

Meanwhile, the notification of the alighting danger may be possible through a mobile terminal carried by a passenger. Such an embodiment is described in detail with reference to FIG. 12 as follows.

FIG. 12 is a diagram for one example of a notification of an alighting danger through a mobile terminal carried by a passenger according to one embodiment of the present invention.

First of all, the detection of the alighting danger according to the embodiment shown in FIG. 12 may be identical to the former descriptions with reference to FIG. 10 and FIG. 11. And, a mobile terminal carried by a passenger may correspond to a mobile terminal carried by a child passenger. In this case, the mobile terminal carried by the child passenger can be connected to the mobile terminal 100 by short range communication such as Bluetooth or the like.

FIG. 12 (a) and FIG. 12 (b) are diagrams of configurations of the mobile terminal 100 carried by a passenger (child). If an alighting danger is detected, referring to FIG. 12 (a), the controller 180 of the mobile terminal 180 can output an alighting danger voice message 1202 together with an alighting danger warning screen 1201 through the touchscreen 151.

Referring to FIG. 12 (b), as a vehicle passes by, if a danger situation is cleared, the controller 180 can guide the passenger to safely get off by outputting a safe alighting screen 1203 and a safe alighting voice message 1204.

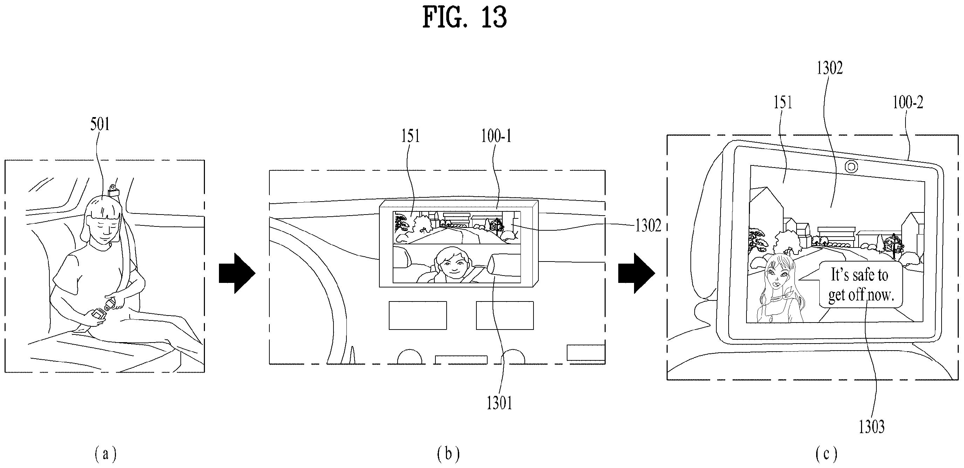

A control method of preventing a child from alighting dangerously by playing an image capable of attracting a child on getting off a car is described in detail with reference to FIG. 13 as follows.

FIG. 13 is a diagram for a control method of if detecting that a child attempts to get off, playing a children's content according to one embodiment of the present invention.

Referring to FIG. 13 (a), the car 200 can sense a not-wearing-safety-belt signal. For instance, the not-wearing-safety-belt signal indicates a state that a locking part is released and may correspond to a state that a child 501 releases a buckle of a safety belt. And, the car 200 can send the not-wearing-safety-belt signal to the mobile terminal 100.

In this case, the controller 180 can output an image 1301 of a rear seat to the touchscreen 151 of the front seat terminal 100-1. In this case, the rear seat image 1301 may include an image captured by the camera 121 of the rear seat terminal 100-2. In particular, in order for a user seated in the driver seat to monitor that the child 501 seated on the rear seat alights safely, the rear seat image 1301 can be outputted to the driver seat terminal 100-1.

Meanwhile, the controller 180 may be able to further output a rear side image 13302 of the car 200 through the driver seat terminal 100-1. In this case, the rear side image 1302 is the image for checking a vehicle approaching in rear of the car 200. As mentioned in the foregoing description, the rear side image 1302 may include an image received from a camera provided to the side mirror 1002 or the rear lamp 1003 of the car 200. As a driver checks the rear side image 1302, if it is confirmed that a different vehicle is running, the driver may prevent the child 151 from getting off the car 200 or may take a safety action. Although a prescribed one of the two screens 1301 and 1302 may be outputted, as shown in FIG. 13 (b), the two screens 1301 and 1302 may be outputted to two regions generated from dividing the display 151 into two parts, respectively [FIG. 13 (b)].

On the other hand, the controller 180 may be able to simultaneously output the rear side image to the display unit of the rear seat terminal 100-2. Hence, when the child 501 gets off the car, the child 501 can get off the car by checking the outputted rear side image, whereby a safer alighting can be secured. Moreover, if there is no vehicle currently moving in the rear side image 1302 (i.e., if it is determined as a safe situation), the controller 180 may further output a safe alighting screen 1303. In this case, the safe alighting screen 1303 is outputted as a character or word balloon preferred by children so as the further attract children. And, it may be able to use a voice of the character as well.

### Detailed Method of Predicting Child's Alighting

As mentioned in the foregoing description with reference to FIG. 13, according to one embodiment of the present invention in part, a child's intention to alight is detected and a warning notification is outputted based on the detected intention. Hence, the demand for a method of detecting a child's intention to alight accurately and variously is rising.

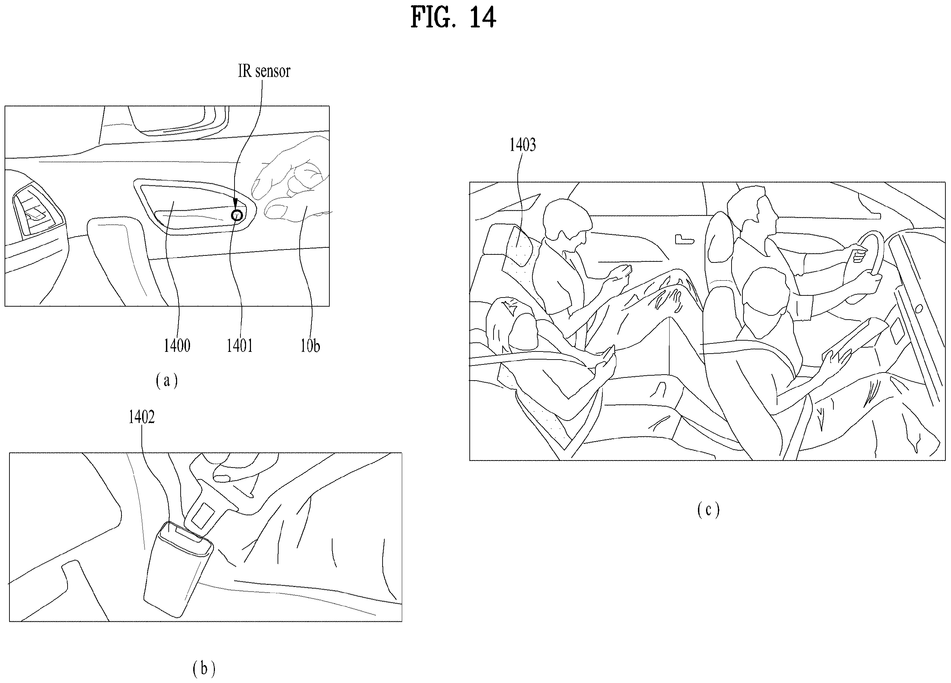

FIG. 14 is a diagram for a method of detecting that a child is getting off a car according to one embodiment of the present invention.

Particularly, FIG. 14 shows various examples of a case that a child attempts to alight from the car 200.

For example, the controller 180 can determine a child's alighting intention based on a signal sensed through a door handle of the car 200. As mentioned in the fore going description with reference to FIG. 1D, the sensing unit of the car 200 may include an IR sensor 1401. For instance, the IR sensor 1401 may be located adjacent to the car door handle 1400. And, the car 200 can detect that a hand of a child corresponding to a passenger is approaching through the IR sensor 1401, as shown in FIG. 14 (a). Moreover, the car 200 can send a sensing signal to the mobile terminal 100. Based on the sensing signal, the controller 180 can determine an alighting intention of the child.

According to the description with reference to FIG. 14 (a), as a method of detecting that an object (e.g., hand) approaches the handle 1400, a detecting method using a proximity sensor such as an IR sensor is taken as an example, by which the present embodiment is non-limited. For instance, the controller 180 detects that the hand is approaching the handle 1400 based on data sensed by an image sensor provided to the handle 1400, a heat detection sensor provided to the handle 1400, or the like, thereby being able to determine the child's alighting intention.

For another example, the controller 180 can determine a child's alighting intention based on a signal sensed by a locking part of a safety belt. Referring to FIG. 14 (b), the car 200 can sense a not-wearing-safety-belt signal 1402 indicating that a safety belt fails to be worn. For instance, the not-wearing-safety-belt signal indicates that the locking part is unlocked and may correspond to a state that the child 501 currently unbuckles the safety belt. And, the car 200 can send the not-wearing-safety-belt signal to the mobile terminal 100. For another instance, based on a signal sensed by a pressure sensor provided to a seat of a car, the controller 180 can determine child's alighting intention. Referring to FIG. 14 (c), the car 200 can sense a change of pressure through a pressure sensor 1403 provided to a seat. For instance, the car 200 can sense that a numerical value of the pressure sensed from a headrest or rest of a seat decreases rapidly. Moreover, the car 200 can send a change of a pressure signal to the mobile terminal 100. In this case, through the numerical value change of the pressure signal, the controller 180 can determine the child's alighting intention. For instance, the numerical value change of the pressure signal may correspond to a case that the pressure sensed from the headrest becomes zero.

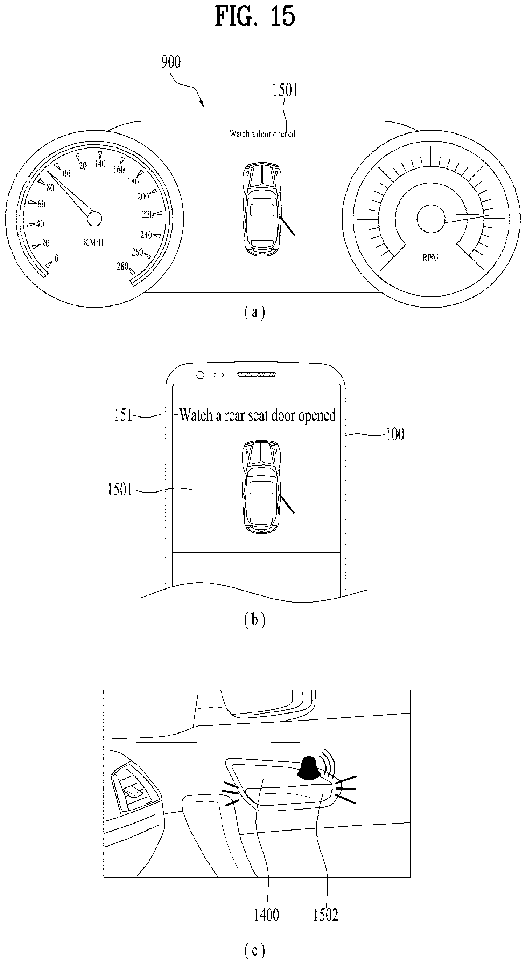

In the following description, when a child attempts to alight from a car, examples of an outputtable warning notification are described in detail with reference to FIGs. 15 to 19.

### Examples of Warning Notifications in Case of Child's Alighting

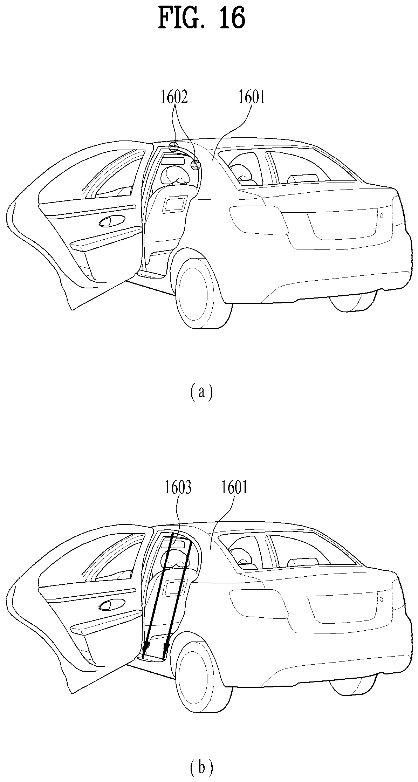

FIG. 15 and FIG. 16 are diagrams for one example of a warning notification outputtable to a child or passenger attempting to get off a car according to one embodiment of the present invention.

First of all, when a moving object (e.g., a different vehicle, etc.) is approaching a car, if a child's intention to alight is determined, the controller 180 may give a warning to the child or a passenger through various outputs of the car.

For instance, the controller 180 can send a control signal for outputting a warning screen 1501 to the car 200. In doing so, referring to FIG. 15 (a), in order to output the warning notification to a driver, the car 200 can output the warning screen 1501 to a display unit of a dashboard 900.

For another instance, referring to FIG. 15 (b), the controller 180 can output the warning screen 1501 through the display unit 151 of the mobile terminal 100. In doing so, the controller 180 sends a control signal to a mobile terminal carried by a child, thereby enabling a warning screen to be outputted through a display unit of the mobile terminal carried by the child.

For further instance, the controller 180 can send a control signal for outputting a visual warning notification to the car 200. In doing so, referring to FIG. 15 (c), the car 200 can output a warning light 1502 or a warning audio from a handle 1400 of an alighting intention determined door. For another further instance, the controller 180 can send a control signal for outputting a visual warning notification to the car 200. In this case, the car 200 may apply a laser to an alighting intention determined door.

Regarding this, FIG. 16 (a) shows a location to which a laser applying unit 1602 is provided. The laser applying unit 1602 may emit light to indicate a danger when a door of a car 1601 is opened.

According to one embodiment of the present invention, it is proposed to apply a laser like bars to a door using the laser. In particular, if the door of the car is opened, referring to FIG. 16 (b), the laser 1603 is applied from a top of a car door frame to a bottom (e.g., a laser direction is variable) in a manner that bars are virtually formed on the door frame of the car, thereby give a warning to an alighting person. In particular, the laser applying unit 1602 may apply the laser toward an opposite door frame. In this case, the opposite door frame may correspond to a bottom part of a door frame, which is opposite to a top part of the door frame having the laser applying unit 1602 provided thereto.

According to another embodiment of the present invention, the controller 180 can control the car 200 to apply a laser not from the door frame but from a window. For instance, in case that a window is opened, it may be able to give a warning of danger as if bars exist in the window in a manner of applying a laser from a top frame of a window door frame to a bottom frame.

Meanwhile, if a door-open signal for an alighting intention determined door is sensed, the car 200 can send the sensed signal to the mobile terminal 100 [not shown in FIG. 15 and FIG. 16]. The controller 180 sends a door-open control signal to the car 200. Based on the received door-open control signal, the car 200 can control the corresponding door not to be opened unless a pressure for opening the door exceeds a preset pressure.

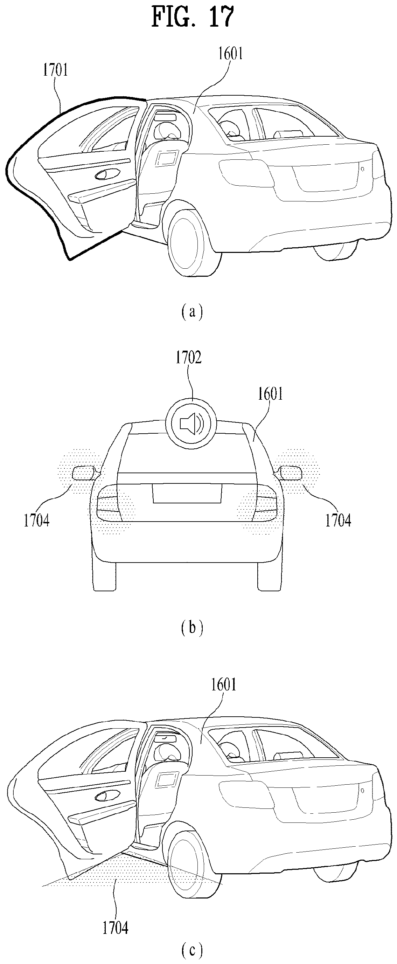

A method of give a warning to a different vehicle approaching in a rear direction is described in detail with reference to FIG. 17 as follows.

FIG. 17 is a diagram for a method of giving a warning to a different vehicle, which currently approaches in a rear or side direction, according to one embodiment of the present invention.

Regarding this, as mentioned in the foregoing description with reference to FIG. 10 and FIG. 11, assume that a vehicle approaching from a rear direction can be detected through a motion detection sensor or a rear camera provided to a car.

For instance, the controller 180 can send a light output signal to the car 200. In this case, referring to FIG. 17 (a), when a car door is opened, the car 200 can output a light 1701 from a car door edge. This is to enable a vehicle approaching from a rear direction to recognize that the car door is open. To this end, according to one embodiment of the present invention, a light emitting unit can be provided to the door edge of the car 200 in a manner that LEDs or the like are installed by being evenly spaced apart from each other. Moreover, a method of controlling a light emitting unit generally mounted on a car can be employed as well.

In this case, referring to FIG. 17 (b), the car 200 can give a warning to the vehicle following from the rear direction by applying an output 1703 of blinking the rear lamp 1003. Moreover, referring to FIG. 17 (c), when the car door is opened, the car 200 can output a warning light 1704 toward a bottom direction of the car door. Moreover, the car 200 can give a warning to the car following from the rear direction by outputting an indoor light of the car 200 [not shown in FIG. 17]. Although one of the above-described warning output methods is available, it is apparent that the above-described waring output methods are available in a manner of being combined with each other in various ways.

For another instance, the controller 180 can send an audio output signal to the car 200. In this case, referring to FIG. 17 (b), the car 200 can give a warning to a vehicle located in rear by honking the horn.

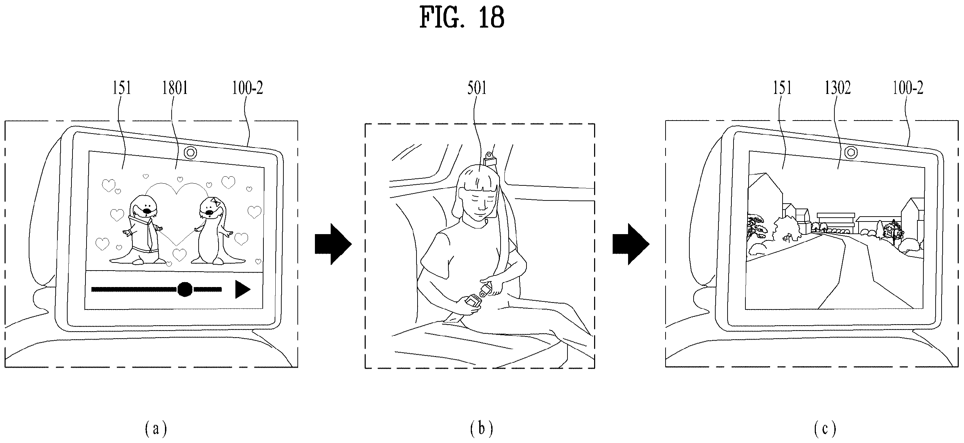

A case of detecting that a child is about to alight in the course of outputting a children's content is explained in detail with reference to FIG. 18 as follows.

FIG. 18 is a diagram for a control method in case of detecting that a child 501 is getting off a car in the course of outputting a children's content through a rear seat terminal 100-2 according to one embodiment of the present invention.

Referring to FIG. 18 (a), the controller 180 can play a children's content 1801 through the display unit 151 of the rear seat terminal 100-2. In doing so, referring to FIG. 18 (b), the controller 180 can detect that a child 501 intends to alight. In this case, the determination of the alighting intention is assumed as identical to that of the former embodiment described with reference to FIG. 14.

If so, referring to FIG. 18 (c), the controller 180 stops outputting the children's content 180 through the display unit 151 and is able to switch to output a rear side image 1302. The reason for this is that if the children's content 1801 keeps being outputted, the child may not accurately determine a nearby situation.

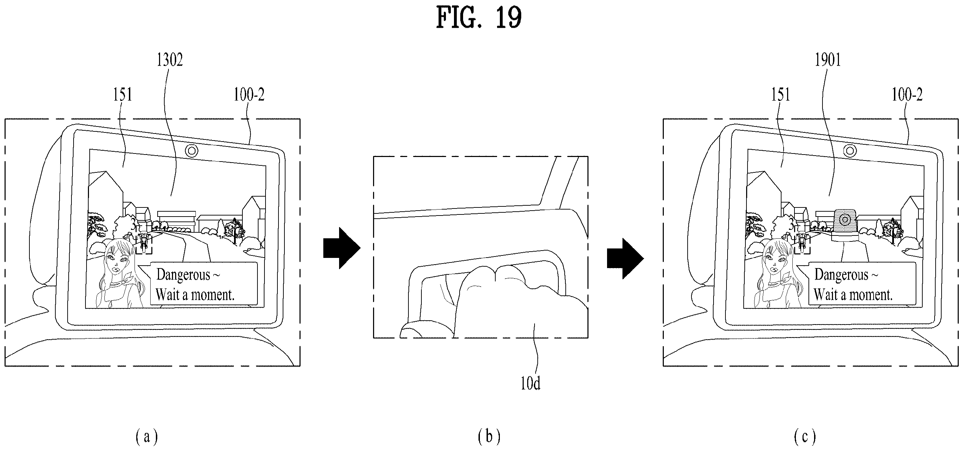

An embodiment in case of switching to the rear side image 1302 is described in detail with reference to FIG. 19 as follows.

FIG. 19 is a diagram for a control method in case of detecting that a door of a car is being opened in the course of outputting a rear side image 1302 according to one embodiment of the present invention.

Referring to FIG. 19 (a), the controller 180 can output a rear side image 1302 through the touchscreen 151 of the rear seat terminal 100-2.

In doing so, the car 200 may sense a signal containing a passenger's alighting intention. For instance, referring to FIG. 19 (b), the alighting intention contained signal may include a signal 10d of grabbing a door handle. And, the car 200 can send the passenger's alighting intention contained signal to the mobile terminal 100.

In this case, referring to FIG. 19 (c), the controller 180 can output an additional warning screen 1901 through the display unit 151. In particular, the warning screen 1910 may inform a person intending to alight by being outputted in a manner of further emphasizing an approaching vehicle in the rear side image 1302 or switching the full screen to a red image.

### Safety Lock Mode - Control of Windows

Meanwhile, according to one embodiment of the present invention, in case that a passenger is a child, it is proposed to control a window of a car distinguishably in accordance with a body weight of a passenger detected through a car seat.

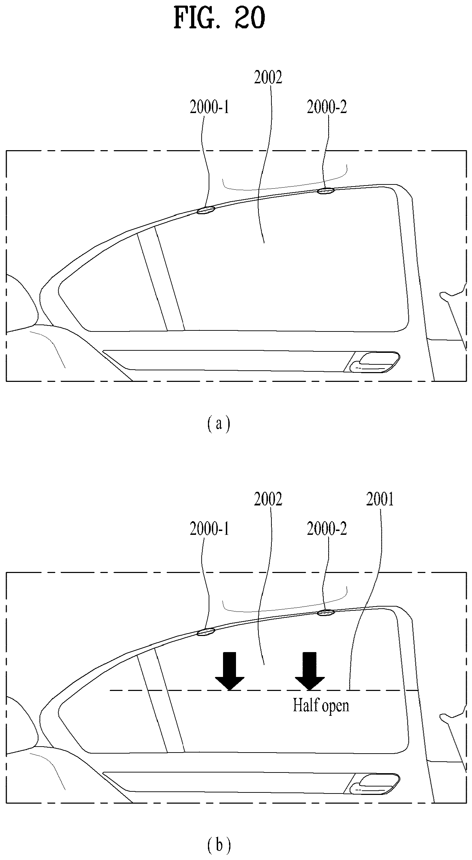

FIG. 20 is a diagram for a method of controlling a car window by distinguishing the car window depending on a passenger's weight according to one embodiment of the present invention.

According to the description of the embodiment with reference to FIG. 20, passenger weights are classified into two groups, by which the reference for grouping is non-limited.

According to the description of the present invention, a weight of a passenger belongs to one of a 1^{st} range and a 2^{nd} range. The car 200 senses a weight of a passenger through a weight detection seat and is then able to send a corresponding sensing signal to the mobile terminal 100. For one example, if a weight of a passenger belongs to the 1^{st} range (e.g., less than 20 kg), the controller 180 may determine that the passenger is a person who needs more protection among children.

Hence, if the passenger belonging to the 1^{st} range raises or lowers a window 2002, the controller 180 can control the car 200 to set a speed of raising/lowering the window 200 to be slower than a preset speed. In particular, the car 200 may be able to raise or lower the window 2002 slowly. Moreover, referring to FIG. 20 (b), the controller 180 may control the car 200 to enable the window 2002 not to be lowered below a prescribed height 2001.

When the window 200 is raised, the controller 180 checks whether a prescribed body part of a passenger is stuck through motion detection sensors 2000-1 and 2000-2 provided to a window frame [FIG. 20 (a)]. If the prescribed body part is stuck, the controller 180 can control the car 200 to stop a motion of the window frame immediately.

For another example, if a weight of a passenger belongs to the 2^{nd} range (e.g., 20 ∼ 40 kg), the controller 180 may determine that the passenger is a person who needs less care among children. Hence, although the controller 180 can control a speed in raising or lowering the window 2002 of the car 200, when the window 200 is opened, the controller 180 can control the window 2002 to be fully opened instead of being opened half.

### Safety Lock Mode - Control of Safety Belt

Regarding the control of the safety belt, the controller 180 may control the safety belt in a manner of classifying passengers into two groups. For instance, when a weight of a passenger belongs to the 1^{st} range mentioned in the foregoing description, if the controller 180 detects that a safety belt is not fastened, the controller 180 can control the car 200 to output an audio guide mention such as 'Fasten a safety belt of a right rear seat' or the like in a manner of lowering volumes of all sounds outputted from a car audio. Particularly, such an audio guide mention can easily attract a passenger's attention using a voice of children's favorite character.

Moreover, the controller 180 is connected to a mobile terminal 100 carried by a child and is then able to control the connected mobile terminal 100 to output a guide screen indicating that the safety belt is not fastened.

Moreover, for instance, when a weight of a passenger belongs to the aforementioned 2^{nd} range, if the safety belt is not fastened, the controller 180 may lead the passenger to wear the safety belt through an audio guide mention as well.

### Safety Lock Mode - Case That Driver Alights by Leaving Child inside Car

Although a weight is not detected from a driver seat, if a weight of a child is detected from a rear seat, the controller 180 may determine that a driver alighted from a car by leaving a child on a rear seat. In this case, according to one embodiment of the present invention, it is proposed to send a shot image of the rear seat to the mobile terminal 100 of the driver. For instance, an inside image of the car is sent to the mobile terminal 100 connected to the car by Wi-Fi Direct.

Moreover, according to one embodiment of the present invention, irrespective of an engine-start of a car, it is able to lock a gear of the car so that the gear is not shifted to another position from a parking (P) position. Moreover, the controller 180 may be able to control the car 200 to prevent a window of the car 300 from being lowered below a half. The controller 180 may control a lock not to open a door of a car or may control a steering wheel to be locked.

### Safety Lock Mode - Car Door Lock Control

If a detected seat weight belongs to a 1^{st} range (e.g., less than 20 kg), the controller 180 may control a lock of a car door so that a door of a car 200 cannot be opened from outside. If the weight belongs to a 2^{nd} range (e.g., 20 ∼ 40 kg), the controller 180 can control the door to be opened by a passenger.

On the other hand, a driver can set/release a lock of a car door of a rear seat child through the mobile terminal 100 of the driver or may set/release the lock of the car door of the rear seat child through a car door control button separately provided to a car.

Moreover, even if the car door is controlled to be locked, the car door should be opened in case of emergency.

Therefore, according to one embodiment of the present invention, if a prescribed condition is met, it is proposed to unlock a car door.

For instance, if a door of a car is hit at least three times or a door handle 1400 of the car is operated at least three times, the controller 180 determines that a current situation is an emergency situation and is then able to control a lock of the car to be released.

If an airbag of a car is activated, the controller 180 can control a lock of the car to be automatically released. The reason for this is that a driver or passenger should get off the car immediately in case of occurrence of a car accident. In this case, a rescue signal may be automatically sent to 119 in Korea (or, 911 in U.S.A.) through a mobile terminal 100 connected to the car.

Besides, if it is determined that a car is submerging or that the car is now on fire, a rescue signal can be sent or a lock can be released.

### Safety Lock Mode - Adjustment of Fastened Level of Safety Belt Based on Car driving Information

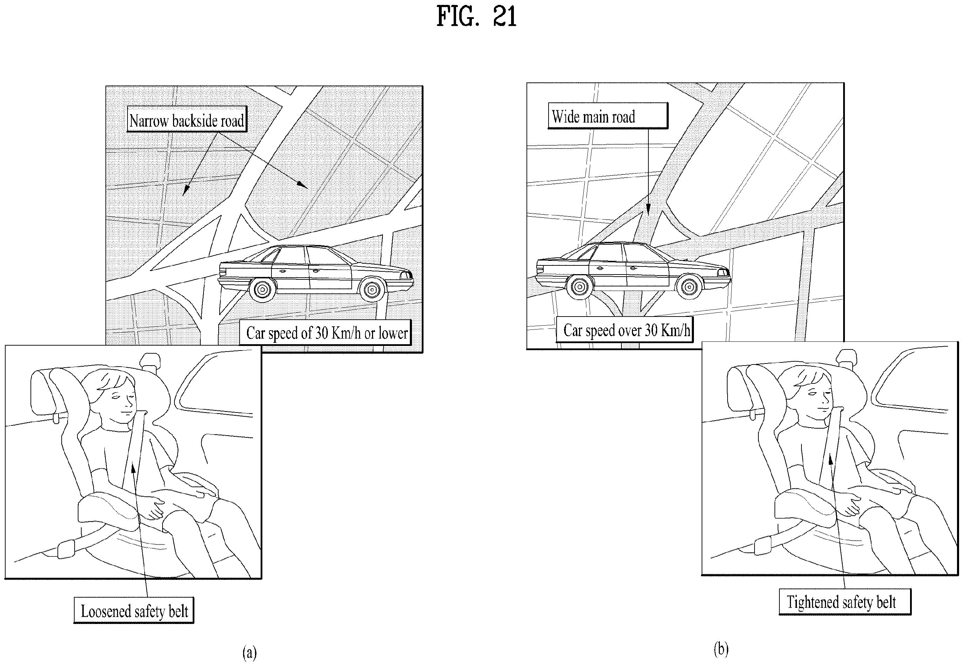

According to one embodiment of the present invention, it is able to adjust a fastened level of a safety belt currently worn by a child in accordance with a driving information of a car. This is described in detail with reference to FIG. 21 as follows.

FIG. 21 is a diagram to describe one example of a method of adjusting a fastened level of a safety belt worn by a child in accordance with a driving information of a car according to one embodiment of the present invention.

First of all, according to one embodiment of the present invention, a car can adjust a fastened level of a safety belt of a seat, on which a child is seated, based on a driving information of the car. In this case, the fastened level of the safety belt means a level of closeness between a safety belt and a passenger. If the fastened level is low, it may mean that the safety belt is worn loosely. If the fastened level is high, it may mean that the safety belt is worn tightly. For example, the fastened level of the safety belt can be adjusted by a pulled length of the safety belt.

The driving information of the car may mean a speed of a car, an RPM value of a car, a type of a car-passing road, a width of a car-passing road, and the like. Based on the road information obtained through a speedometer, a navigation and the like, the road information obtained by analyzing an image obtained through a camera provided to a front side and/or a rear side of the car, and the like, the car is able to obtain the driving information of the car.

According to an embodiment, a signal for adjusting a fastened level of a safety belt may be generated by a controller (not shown in the drawing) of a car. Alternatively, a signal for adjusting a fastened level of a safety belt may be generated by the controller 180 of the mobile terminal 100 based on the car driving information sent from the car. In the latter case, the controller 180 of the mobile terminal 100 can send a signal for adjusting a fastened level of a safety belt to a control unit of the car or a driving unit of the safety belt through the wireless communication unit 110.

For instance, referring to FIG. 21 (a), if the control unit of the car or the controller 180 of the mobile terminal 100 determines that a car sped is equal to or lower than a preset speed (e.g., 30 km/h) based on the driving information of the car or that the car is currently driven on a road having a width equal to or smaller than a preset width based on the driving information of the car, it is able to control a fastened level of a safety belt to be set to a preset level by extending a length of the safety belt to a preset length.

For another instance, referring to FIG. 21 (b), if the control unit of the car or the controller 180 of the mobile terminal 100 determines that a car sped exceeds a preset speed (e.g., 30 km/h) based on the driving information of the car or that the car is currently driven on a road having a width exceeding a preset width based on the driving information of the car, it is able to control a fastened level of a safety belt to be set to a preset level by reducing a length of the safety belt to a preset length.

According to the present embodiment, if a danger factor (e.g., a case that a speed of a car is slow, a case that a car is driven on an alley, etc.) is small, a safety belt currently worn by a child can be automatically adjusted loosely. If a danger factor (e.g., a case that a speed of a car is fast, a case that a car is driven on a highway etc.) is large, a safety belt currently worn by a child can be automatically adjusted tightly.

### Manual Entrance into Safety Lock Mode

According to the embodiment mentioned in the foregoing description, a safety lock mode is automatically entered. Yet, the safety lock mode can be manually entered by a determination made by a car driver. For instance, it can be easily controlled using a car window control button provided to a driver seat. The reason for this is that a window control button is usually provided to each seat.

In case that a prescribed pattern is inputted to a window control button for a right rear seat, the controller 180 can control a safety lock mode to be entered for the corresponding seat only. In this case, the prescribed pattern may include a pattern of manipulating the window control button at least twice in top direction.

Accordingly, embodiments of the present invention provide various effects and/or features.

According to at least one of embodiments of the present invention, safety can be secured for a user currently driving a car or a user currently alighting from the car.

The present invention mentioned in the foregoing description can be implemented in a program recorded medium as computer-readable codes. The computer-readable media may include all kinds of recording devices in which data readable by a computer system are stored. The computer-readable media may include HDD (Hard Disk Drive), SSD (Solid State Disk), SDD (Silicon Disk Drive), ROM, RAM, CD-ROM, magnetic tapes, floppy discs, optical data storage devices, and the like for example and also include carrier-wave type implementations (e.g., transmission via Internet). Further, the computer may include the controller 180 of the terminal. It will be appreciated by those skilled in the art that various modifications and variations can be made in the present invention without departing from the scope of the inventions. Thus, it is intended that the present invention covers the modifications and variations of this invention provided they come within the scope of the appended claims and their equivalents.

## Claims

1. A mobile terminal (100), comprising:
a wireless communication unit (110) configured to perform wireless communication;
an output unit (150); and
a controller (180) configured to control the wireless communication unit (110) to receive from a vehicle (200), sensing data of the vehicle (200), wherein the received sensing data includes data indicating a wearing length of a safety belt (403) corresponding to a preset seat and data obtained by a weight detection sensor (404) at the preset seat,
wherein the controller (180) is configured to:
determine an age of the passenger based on the data indicating the wearing length of the safety belt (403) corresponding to the preset seat or the data obtained by the weight detection sensor (404) provided to the preset seat, and
output, at the output unit (150), a danger warning when the determined age of the passenger is equal to or lower than a preset age.

2. The mobile terminal (100) of claim 1, wherein the received sensing data further includes at least one selected from the group consisting of:
location information of the vehicle (200),
data indicating whether a door corresponding to a preset seat is open,
an image obtained by a camera at the vehicle (200),
an image obtained by a camera corresponding to the preset seat,
data indicating whether a safety belt (403) corresponding to the preset seat is being used, and
data obtained by a sensor at the door corresponding to the preset seat.

3. The mobile terminal (100) of claim 2, wherein the controller (180) is configured to:
identify an object approaching the vehicle (200) based on the image obtained by the camera at the vehicle (200),
determine a speed of the identified object, and
control the output unit (150) to output timer information based on the determined speed.

4. The mobile terminal (100) of claim 2, wherein when an object approaching the vehicle (200) is identified based on the image obtained by the camera at the vehicle (200), the controller (180) is configured to determine that the current state of the vehicle (200) corresponds to a preset example.

5. The mobile terminal (100) of claim 4, wherein the output unit (150) includes a display (151), and wherein the controller (180) is configured to:
output, to the display (151), the image obtained by the camera at the vehicle (200), and
display a danger indicator (1101) and a safety indicator (1102) based on a distance between the identified object and the vehicle (200).

6. The mobile terminal (100) of claim 4, wherein based on the image obtained by the camera at the vehicle (200), when a size of the identified object is equal to or greater than a preset size or a speed of the identified object is equal to or greater than a preset speed, the controller (180) is configured to:
determine a potential danger of a passenger at the preset seat, and
output, at the output unit (150), a danger warning screen (1201), and
wherein based on the image obtained by the camera at the vehicle (200), when the size of the identified object is smaller than the preset size or the speed of the identified object is smaller than the preset speed, the controller is configured to output, at the output unit (150), a guide screen (1203).

7. The mobile terminal (100) of claim 2, wherein based on the received sensing data, when a wearing state of the safety belt (403) corresponding to the preset seat is released, the controller (180) is configured to determine that a passenger at the preset seat intends to open the door of the vehicle (200), and
wherein when the controller (180) determines that the passenger at the preset seat intends to open the door of the vehicle (200), the controller is configured to control the wireless communication unit (110) to send a preset signal to the vehicle (200), and wherein the preset signal includes a signal for controlling a laser applying unit (1602) at the vehicle (200).

8. The mobile terminal (100) of claim 1, wherein the controller (180) is configured to:
recognize a face from the image obtained by the camera of the vehicle (200) corresponding to the preset seat, and
determine the age of the passenger based on the recognized face.

9. A vehicle (200), comprising;
a sensing unit (210) configured to obtain sensing data at the vehicle (200), the sensing unit (210) including at least one camera;
an output unit (220); and
a controller (240),
wherein the obtained sensing data optionally includes:
location information of the vehicle (200), data indicating whether a door corresponding to a preset seat is open,
an image obtained by a camera at the vehicle (200),
an image obtained by a camera corresponding to the preset seat,
data indicating whether a safety belt (403) corresponding to the preset seat is being used, and
data obtained by a sensor at the door corresponding to the preset seat, and wherein the obtained sensing data includes at least one selected from the group consisting of:
data indicating a wearing length of the safety belt (403) corresponding to the preset seat and
data obtained by a weight detection sensor (404) at the preset seat, and
wherein the controller (240) is configured to:
determine an age of the passenger based on the data indicating the wearing length of the safety belt (403) corresponding to the preset seat or the data obtained by the weight detection sensor (404) provided to the preset seat, and
output, at the output unit (220), a danger warning when the determined age of the passenger is equal to or lower than a preset age and a current state of the car corresponds to a preset example.

10. The vehicle (200) of claim 9, further comprising a wireless communication unit (203) configured to perform a wireless communication with a mobile terminal (100), wherein the controller (240) is configured to control the wireless communication unit (203) to send the obtained sensing data to the mobile terminal (100).

11. The vehicle (200) of claim 9 or claim 10, wherein based on the speed of the vehicle (200) included in the obtained sensing data, the controller (240) is configured to adjust the wearing length of the safety belt (403) corresponding to the preset seat.

12. The vehicle (200) of any one of claims 9 to 11, wherein when an object approaching the vehicle (200) is identified based on the image obtained by the camera at the vehicle (200), the controller (240) is configured to determine that the current state of the vehicle (200) corresponds to the preset example.

## Patentansprüche

1. Mobiles Endgerät (100), das Folgendes umfasst:
eine drahtlose Kommunikationseinheit (110), die konfiguriert ist, drahtlose Kommunikation durchzuführen;
eine Ausgabeeinheit (150); und
eine Steuereinheit (180), die konfiguriert ist, die drahtlose Kommunikationseinheit (110) zu steuern, von einem Fahrzeug (200) Erfassungsdaten des Fahrzeugs (200) zu empfangen, wobei die empfangenen Erfassungsdaten Daten, die eine Tragelänge eines Sicherheitsgurts (403), der einem voreingestellten Sitz entspricht, angeben, und Daten, die durch einen Gewichtssensor (404) an dem voreingestellten Sitz erhalten werden, enthalten,
wobei die Steuereinheit (180) konfiguriert ist zum
Bestimmen eines Alters des Passagiers auf der Grundlage der Daten, die die Tragelänge des Sicherheitsgurts (403), der dem voreingestellten Sitz entspricht, angeben oder der Daten, die durch den Gewichtssensor (404), der für den voreingestellten Sitz bereitgestellt ist, erhalten wurden, und
Ausgeben bei der Ausgabeeinheit (150) einer Gefahrenwarnung dann, wenn das bestimmte Alter des Passagiers gleich einem voreingestellten Alter oder geringer ist.

2. Mobiles Endgerät (100) nach Anspruch 1, wobei die empfangenen Erfassungsdaten ferner mindestens ein Element der Gruppe enthalten, die aus Folgendem besteht:
Standortinformationen des Fahrzeugs (200),
Daten, die angeben, ob eine Tür, die einem voreingestellten Sitz entspricht, geöffnet ist,
einem Bild, das durch eine Kamera bei dem Fahrzeug (200) erhalten wurde,
einem Bild, das durch eine Kamera, die dem voreingestellten Sitz entspricht, erhalten wurde,
Daten, die angeben, ob ein Sicherheitsgurt (403), der dem voreingestellten Sitz entspricht, verwendet wird, und
Daten, die durch einen Sensor bei der Tür, die dem voreingestellten Sitz entspricht, erhalten wurden.

3. Mobiles Endgerät (100) nach Anspruch 2, wobei die Steuereinheit (180) konfiguriert ist zum
Identifizieren eines Gegenstands, der sich dem Fahrzeug (200) nähert, auf der Grundlage des Bildes, das von der Kamera bei dem Fahrzeug (200) erhalten wird,
Bestimmen einer Geschwindigkeit des identifizierten Gegenstands, und
Steuern der Ausgabeeinheit (150), Zeitgeberinformationen auf der Grundlage der bestimmten Geschwindigkeit auszugeben.

4. Mobiles Endgerät (100) nach Anspruch 2, wobei die Steuereinheit (180) konfiguriert ist, dann, wenn ein Gegenstand, der sich dem Fahrzeug (200) nähert, auf der Grundlage des Bildes, das durch die Kamera bei dem Fahrzeug (200) erhalten wurde, identifiziert wird, zu bestimmen, dass der gegenwärtige Zustand des Fahrzeugs (200) einem voreingestellten Beispiel entspricht.

5. Mobiles Endgerät (100) nach Anspruch 4, wobei die Ausgabeeinheit (150) eine Anzeigevorrichtung (151) enthält und wobei die Steuereinheit (180) konfiguriert ist zum:
Ausgeben auf der Anzeigevorrichtung (151) des Bildes, das durch die Kamera bei dem Fahrzeug (200) erhalten wurde, und
Angeben eines Gefahrenindikators (1101) und eines Sicherheitsindikators (1102) auf der Grundlage einer Entfernung zwischen dem identifizierten Gegenstand und dem Fahrzeug (200).

6. Mobiles Endgerät (100) nach Anspruch 4, wobei auf der Grundlage des Bildes, das durch die Kamera bei dem Fahrzeug (200) erhalten wurde, dann, wenn eine Größe des identifizierten Gegenstands gleich oder größer einer voreingestellten Größe ist oder eine Geschwindigkeit des identifizierten Gegenstands gleich oder größer einer voreingestellten Geschwindigkeit ist, die Steuereinheit (180) konfiguriert ist, zum
Bestimmen einer möglichen Gefahr für einen Passagier bei dem voreingestellten Sitz und
Ausgeben bei der Ausgabeeinheit (150) eines Gefahrenwarnungsbildschirms (1201),
wobei auf der Grundlage des Bildes, das durch die Kamera bei dem Fahrzeug (200) erhalten wird, dann, wenn die Größe des identifizierten Objekts kleiner als die voreingestellte Größe ist, oder die Geschwindigkeit des identifizierten Objekts kleiner als die voreingestellte Geschwindigkeit ist, die Steuereinheit konfiguriert ist, bei der Ausgabeeinheit (150) einen Führungsbildschirm (1203) auszugeben.

7. Mobiles Endgerät (100) nach Anspruch 2, wobei die Steuereinheit (180) konfiguriert ist, auf der Grundlage der empfangenen Erfassungsdaten dann, wenn ein Tragezustand des Sicherheitsgurts (403), der dem voreingestellten Sitz entspricht, freigegeben ist, zu bestimmen, dass ein Passagier bei dem voreingestellten Sitz beabsichtigt, die Tür des Fahrzeugs (200) zu öffnen,
wobei die Steuereinheit konfiguriert ist, dann, wenn die Steuereinheit (180) bestimmt, dass der Passagier bei dem voreingestellten Sitz beabsichtigt, die Tür des Fahrzeugs (200) zu öffnen, die drahtlose Kommunikationseinheit (110) zu steuern, ein voreingestelltes Signal an das Fahrzeug (200) zu senden, wobei das voreingestellte Signal ein Signal zum Steuern einer Laseranwendungseinheit (1602) bei dem Fahrzeug (200) enthält.

8. Mobiles Endgerät (100) nach Anspruch 1, wobei die Steuereinheit (180) konfiguriert ist zum
Erkennen eines Gesichts aus dem Bild, das durch die Kamera des Fahrzeugs (200), die dem voreingestellten Sitz entspricht, erhalten wurde, und
Bestimmen des Alters des Passagiers auf der Grundlage des erkannten Gesichts.

9. Fahrzeug (200), das Folgendes umfasst:
eine Erfassungseinheit (210), die konfiguriert ist, Erfassungsdaten bei dem Fahrzeug (200) zu erhalten, wobei die Erfassungseinheit (210) mindesten eine Kamera enthält;
eine Ausgabeeinheit (220) und
eine Steuereinheit (240),
wobei die erhaltenen Erfassungsdaten optional Folgendes enthalten:
Standortinformationen des Fahrzeugs (200), Daten, die angeben, ob eine Tür, die einem voreingestellten Sitz entspricht, geöffnet ist,
ein Bild, das durch eine Kamera bei dem Fahrzeug (200) erhalten wurde,
ein Bild, das durch eine Kamera, die dem voreingestellten Sitz entspricht, erhalten wurde,
Daten, die angeben, ob ein Sicherheitsgurt (403), der dem voreingestellten Sitz entspricht, verwendet wird, und
Daten, die durch einen Sensor bei der Tür, die dem voreingestellten Sitz entspricht, erhalten wurden, wobei
die erhaltenen Erfassungsdaten mindestens ein Element enthalten, das aus der Gruppe gewählt ist, die aus Folgendem besteht:
Daten, die eine Tragelänge des Sicherheitsgurts (403), der dem voreingestellten Sitz entspricht, angeben, und
Daten, die durch einen Gewichtssensor (404) bei dem voreingestellten Sitz erhalten wurden,
wobei die Steuereinheit (240) konfiguriert ist zum:
Bestimmen eines Alters des Passagiers auf der Grundlage der Daten, die die Tragelänge des Sicherheitsgurts (403), der dem voreingestellten Sitz entspricht, angeben oder der Daten, die durch den Gewichtssensor (404), der für den voreingestellten Sitz bereitgestellt ist, erhalten wurden, und
Ausgeben bei der Ausgabeeinheit (220) einer Gefahrenwarnung dann, wenn das bestimmte Alter des Passagiers gleich oder geringer einem voreingestellten Alter ist und ein gegenwärtiger Zustand des Fahrzeugs einem voreingestellten Beispiel entspricht.

10. Fahrzeug (200) nach Anspruch 9, das ferner eine drahtlose Kommunikationseinheit (203) umfasst, die konfiguriert ist, drahtlose Kommunikation mit einem mobilen Endgerät (100) durchzuführen, wobei die Steuereinheit (240) konfiguriert ist, die drahtlose Kommunikationseinheit (203) zu steuern, die erhaltenen Erfassungsdaten zu dem mobilen Endgerät (100) zu senden.

11. Fahrzeug (200) nach Anspruch 9 oder Anspruch 10, wobei die Steuereinheit (240) konfiguriert ist, auf der Grundlage der Geschwindigkeit des Fahrzeugs (200), die in den erhaltenen Erfassungsdaten enthalten ist, die Tragelänge des Sicherheitsgurts (403), der dem voreingestellten Sitz entspricht, anzupassen.

12. Fahrzeug (200) nach einem der Ansprüche 9 bis 11, wobei die Steuereinheit (240) konfiguriert ist, dann, wenn ein Gegenstand, der sich dem Fahrzeug (200) nähert, auf der Grundlage des Bildes, das durch die Kamera bei dem Fahrzeug (200) erhalten wurde, identifiziert wird, zu bestimmen, dass der gegenwärtige Zustand des Fahrzeugs (200) dem voreingestellten Beispiel entspricht.

## Revendications

1. Terminal mobile (100), comprenant :
une unité de communication sans fil (110) configurée pour effectuer une communication sans fil ;
une unité de sortie (150) ; et
un organe de commande (180) configuré pour commander à l'unité de communication sans fil (110) de recevoir, en provenance d'un véhicule (200), des données de détection du véhicule (200), dans lequel les données de détection reçues comprennent des données indiquant une longueur de port d'une ceinture de sécurité (403) correspondant à un siège préréglé et des données obtenues par un capteur de détection de poids (404) au siège préréglé,
dans lequel l'organe de commande (180) est configuré pour effectuer :
la détermination d'un âge du passager sur la base des données indiquant la longueur de port de la ceinture de sécurité (403) correspondant au siège préréglé ou des données obtenues par le capteur de détection de poids (404) prévu au siège corps réglé, et
la délivrance, à l'unité de sortie (150), d'un avertissement de danger lorsque l'âge déterminé du passager est inférieur ou égal à un âge préréglé.

2. Terminal mobile (100) selon la revendication 1, dans lequel les données de détection reçues comprennent en outre au moins l'une sélectionnée dans le groupe se composant de
des informations d'emplacement du véhicule (200),
des données indiquant si une porte correspondant à un siège préréglé est ouverte,
une image obtenue par une caméra au véhicule (200),
une image obtenue par une caméra correspondant au siège préréglé,
des données indiquant si une ceinture de sécurité (403) correspondant au siège préréglé est en cours d'utilisation, et
des données obtenues par un capteur à la porte correspondant au siège préréglé.

3. Terminal mobile (100) selon la revendication 2, dans lequel l'organe de commande (180) est configuré pour effectuer :
l'identification d'un objet s'approchant du véhicule (200) sur la base de l'image obtenue par la caméra au véhicule (200),
la détermination d'une vitesse de l'objet identifié, et
la commande à l'unité de sortie (150) de délivrer des informations de minuterie sur la base de la vitesse déterminée.

4. Terminal mobile (100) selon la revendication 2, dans lequel, lorsqu'un objet s'approchant du véhicule (200) est identifié sur la base de l'image obtenue par la caméra au véhicule (200), l'organe de commande (180) est configuré pour déterminer que l'état actuel du véhicule (200) correspond à un exemple préréglé.

5. Terminal mobile (100) selon la revendication 4, dans lequel l'unité de sortie (150) comprend un affichage (151), et dans lequel l'organe de commande (180) est configuré pour effectuer :
la délivrance, sur l'affichage (151), de l'image obtenue par la caméra au véhicule (200), et
l'affichage d'un indicateur de danger (1101) et d'un indicateur de sécurité (1102) sur la base d'une distance entre l'objet identifié et le véhicule (200).

6. Terminal mobile (100) selon la revendication 4, dans lequel, sur la base de l'image obtenue par la caméra au véhicule (200), lorsqu'une taille de l'objet identifié est supérieure ou égale à une taille préréglée ou une vitesse de l'objet identifié est supérieure ou égale à une vitesse préréglée, l'organe de commande (180) est configuré pour effectuer :
la détermination d'un danger potentiel d'un passager au siège préréglé, et
la délivrance, à l'unité de sortie (150), d'un écran d'avertissement de danger (1201), et
dans lequel, sur la base de l'image obtenue par la caméra au véhicule (200), lorsque la taille de l'objet identifié est inférieure à la taille préréglée ou la vitesse de l'objet identifié est inférieure à la vitesse préréglée, l'organe de commande est configuré pour délivrer, à l'unité de sortie (150), un écran de guide (1203).

7. Terminal mobile (100) selon la revendication 2, dans lequel, sur la base des données de détection reçues, lorsqu'un état de port de la ceinture de sécurité (403) correspondant au siège réglé est libéré, l'organe de commande (180) est configuré pour déterminer qu'un passager au siège préréglé a l'intention d'ouvrir la porte du véhicule (200), et
dans lequel, lorsque l'organe de commande (180) détermine que le passager au siège préréglé a l'intention d'ouvrir la porte du véhicule (200), l'organe de commande est configuré pour commander à l'unité de communication sans fil (110) d'envoyer un signal préréglé au véhicule (200), et dans lequel le signal préréglé comprend un signal pour commander une unité d'application laser (1602) au véhicule (200).

8. Terminal mobile (100) selon la revendication 1, dans lequel l'organe de commande (180) est configuré pour effectuer :
la reconnaissance d'un visage à partir de l'image obtenue par la caméra du véhicule (200) correspondant au siège préréglé, et
la détermination de l'âge du passager sur la base du visage reconnu.

9. Véhicule (200), comprenant :
une unité de détection (210) configurée pour obtenir des données de détection au véhicule (200), l'unité de détection (210) comprenant au moins une caméra ;
une unité de sortie (220) ; et
un organe de commande (240),
dans lequel les données de détection obtenues comprennent facultativement :
des informations d'emplacement du véhicule (200), des données indiquant si une porte correspondant à un siège préréglé est ouverte,
une image obtenue par une caméra au véhicule (200),
une image obtenue par une caméra correspondant au siège préréglé,
des données indiquant si une ceinture de sécurité (403) correspondant au siège préréglé est en cours d'utilisation,
et
des données obtenues par un capteur à la porte correspondant au siège préréglé, et
dans lequel les données de détection obtenues comprennent au moins l'une sélectionnée dans le groupe se composant de :
des données indiquent une longueur de port de la ceinture de sécurité (403) correspondant au siège préréglé, et
des données obtenues par un capteur de détection de poids (404) au siège préréglé, et
dans lequel l'organe de commande (240) est configuré pour effectuer :
la détermination d'un âge du passager sur la base des données indiquant la longueur de port de la ceinture de sécurité (403) correspondant au siège préréglé ou des données obtenues par le capteur de détection de poids (404) prévu au siège préréglé, et
la délivrance, à l'unité de sortie (220), d'un avertissement de danger lorsque l'âge déterminé du passager est inférieur ou égal à un âge préréglé et un état actuel de la voiture correspond à un exemple préréglé.

10. Véhicule (200) selon la revendication 9, comprenant en outre une unité de communication sans fil (203) configurée pour effectuer une communication sans fil avec un terminal mobile (100), dans lequel l'organe de commande (240) est configuré pour commander à l'unité de communication sans fil (203) d'envoyer les données de détection obtenues au terminal mobile (100).

11. Véhicule (200) selon la revendication 9 ou 10, dans lequel, sur la base de la vitesse du véhicule (200) incluse dans les données de détection obtenues, l'organe de commande (240) est configuré pour ajuster la longueur de port de la ceinture de sécurité (403) correspondant au siège préréglé.

12. Véhicule (200) selon l'une quelconque des revendications 9 à 11, dans lequel, lorsqu'un objet s'approchant du véhicule (200) est identifié sur la base de l'image obtenue par la caméra au véhicule (200), l'organe de commande (240) est configuré pour déterminer que l'état actuel du véhicule (200) correspond à l'exemple préréglé.
